# EUROPEAN PATENT SPECIFICATION

(11) **EP 4 189 988 B1**
(45) Date of publication and mention of the grant of the patent: **26.03.2025**
(21) Application number: 21746684.6
(22) Date of filing: 19.07.2021
(51) Int. Cl.: H04W 28/02, H04W 48/14, H04W 76/14, H04W 92/18, H04W 4/44, H04W 40/22, H04W 88/04, H04W 4/46

(54) **TECHNIQUE OF RELAYING CAPABILITY INFORMATION TO A NETWORK NODE**
TECHNIK ZUR WEITERLEITUNG VON FÄHIGKEITSINFORMATIONEN AN EINEN NETZWERKKNOTEN
TECHNIQUE POUR RELAYER DES INFORMATIONS DE CAPACITÉ À UN NOEUD DE RÉSEAU

(30) Priority: 30.07.2020 WO PCT/CN2020/105836
(43) Date of publication of application: 07.06.2023
(73) Proprietor: Telefonaktiebolaget LM Ericsson (publ), 164 83 Stockholm (SE)
(72) Inventor: ORSINO, Antonino, 02480 Kirkkonummi (FI); ZHANG, Zhang, Beijing, Chaoyang District 100102 (CN)
(74) Representative: Murgitroyd & Company
(86) International application number: PCT/EP2021/070122
(87) International publication number: WO 2022/023100

(56) References cited:
- US-A1- 2018 092 067
- US-A1- 2018 092 067

## Description

### Technical Field

The present disclosure generally relates to communicating information indicative of a sidelink-related radio access capability. In more detail, the disclosure relates to transmitting and using capability information indicative of at least one sidelink-related radio access capability of a remote communication unit. The technique can be implemented as a device, as a method, as a system, as a computer program and as a computer-readable medium.

### Background

In Release 14 (Rel-14) and Release 15 (Rel-15) of the 3rd Generation Partnership Program (3GPP), extensions for device-to-device (D2D) communication were aimed at supporting vehicle-to-everything (V2X) communication, which includes any combination of direct communication between vehicles, pedestrians and infrastructure. V2X communication may take advantage of a network (NW) infrastructure, when available, but at least basic V2X connectivity may be possible even in case of lack of coverage of the NW. Providing a Long Term Evolution (LTE)-based V2X interface may be economically advantageous because of the LTE economies of scale and it may enable tighter integration between communications with the NW infrastructure (vehicle-to-infrastructure, V2I, or vehicle-to-network, V2N), pedestrian (vehicle-to-pedestrian, V2P) and other vehicles (vehicle-to-vehicle, V2V), as compared to using a dedicated V2X technology such as defined by IEEE 802.11p.

V2X communications may carry both non-safety and safety information, where each of the applications and services may be associated with specific requirement sets, e.g., in terms of latency, reliability or data rates.

There are several different use cases for V2X using LTE:
- V2V: covering LTE-based communication between vehicles, either via a cellular interface known as Uu or via a sidelink interface known as PC5;
- V2P: covering LTE-based communication between a vehicle and a device carried by an individual (e.g., handheld terminal carried by a pedestrian, cyclist, driver or passenger), either via Uu or PC5;
- V2I or V2N: covering LTE-based communication between a vehicle and a roadside unit or network. A roadside unit (RSU) is a transportation infrastructure entity (e.g., an entity transmitting speed notifications) that communicates with V2X capable entities over PC5 or over Uu. For V2N, the communication may be performed on Uu.

The 3GPP SA1 working group specified new service requirements for future V2X services in the work item FS_eV2X. In total, 25 use cases have been identified for advanced V2X services which will be used in 5G (i.e., at least one of LTE and new Radio (NR)). Such use cases are categorized into four use case groups: vehicle platooning, extended sensors, advanced driving and remote driving. Direct unicast transmission over sidelink will be needed in some use cases such as platooning, cooperative driving and dynamic ride sharing. For these advanced applications, the expected requirements to meet the needed data rate, capacity, reliability, latency, communication range and speed are more stringent. The consolidated requirements for each use case group are captured in 3GPP TR 22.886.

National Security and Public Safety (NSPS) is considered one important use case, which may benefit from NR sidelink features developed in 3GPP Release 16. In some scenarios, such as indoor firefighting, forest firefighting, earthquake rescue, and sea rescue, NSPS services need to operate with partial or without NW coverage, for example because the infrastructure is (e.g., partially) destroyed or not available. Therefore, coverage extension may be advantageous for NSPS, in particular, for both NSPS services communicated between a user Equipment (UE) and a cellular NW and that communicated between UEs over sidelink. Coverage extension for sidelink-based communication, including both UE to NW relay for cellular coverage extension and UE to UE relay for sidelink coverage extension may thus be advantageous.

In a system comprising a UE or another wireless mobile terminal, and a network node (NN), the NN should be informed of capabilities of the UE in order to provide the right configurations so that a connection between the UE and the NN can be established or reconfigured properly. This may lead to coverage extension.

In a sidelink relay scenario, according to current state of the art, a remote communication unit (RMCU) does not have any possibility to report its capabilities to the NN or the network since, generally, there is no direct path or RRC connection between the RMCU and the NN. Therefore, since no capabilities of the RMCU are known on the network side, a relay path connectivity cannot be established or can be established only with a default configuration, and no service requirements can be guaranteed.

Document US 2018/092067 A1 may be construed to disclose a system and method for device-to-device (D2D) communication that includes detecting, by a transmitting user equipment (UE) of a plurality of UEs, a sidelink type of a receiving UE of the plurality of UEs, the sidelink type used by the receiving UE to communicate on a discovery channel, determining, by the transmitting UE, a pool of resources for an air interface supported by the receiving UE and the transmitting UE, selecting, by the transmitting UE, transmission resources from the pool of resources according to the sidelink type of the receiving UE, indicating, by the transmitting UE, the transmission resources to the receiving UE over the discovery channel, and communicating, by the transmitting UE, directly with the receiving UE using the transmission resources.

### Summary

There is a need for a technique that provides an efficient procedure for capability exchange of a remote communication unit, RMCU, in sidelink relay scenarios.

According to the present disclosure, there are provided methods, an RLCU, an RMCU, an NN and a computer program according to the independent claims. Further developments are set forth in the dependent claims.

According to a first aspect, there is provided a method of informing a network node, NN, of a network about at least one sidelink-related radio access capability of a remote communication unit, RMCU, to enable configuring a relay path between the RMCU and the NN via a relay communication unit, RLCU, connected to the NN. The method is performed by the RLCU and comprises receiving, from the RMCU, first capability information indicative of at least one sidelink-related radio access capability of the RMCU, and transmitting the first capability information to the NN.

For example, the sidelink is based on a PC5 interface of the RMCU. The at least one sidelink-related radio access capability of the RMCU may identify a sidelink interface of the RMCU, for example the PC5 interface of the RMCU. Alternatively or additionally, the at least one sidelink-related radio access capability of the RMCU may comprise a capability of the RMCU for establishing a sidelink connection to the RLCU connected to the NN of the network. The at least one sidelink-related radio access capability of the RMCU for example comprises a capability of the RMCU for establishing a relay path over a sidelink interface (e.g., the PC5 interface) of the RMCU, for example a relay path between the RMCU and the NN via the RLCU. The relay path between the RMCU and the NN via the RLCU may comprise a first connection between the RMCU and the RLCU and a second connection between the RLCU and the NN, wherein the first connection is established over a sidelink interface (e.g., the PC5 interface) of the RMCU and, optionally, over a sidelink interface (e.g., a PC5 interface) of the RLCU.

The method may further comprise transmitting, to the NN, second capability information indicative of at least one relay capability of the RLCU together with the first capability information. The at least one relay capability of the RLCU may comprise a capability of the RLCU to establish a sidelink communication (e.g., via the PC5 interface of the RLCU) to the RMCU. The at least one relay capability of the RLCU may comprise a capability of the RLCU to establish a relay path between the RMCU and the NN via the RLCU, for example using at least one interface chosen from a sidelink interface (e.g., the PC5 interface) of the RMCU and a sidelink interface (e.g., the PC5 interface) of the RLCU.

When it is generally referred to "capability information" herein, it is to be understood that at least one of the first capability information and the second capability information is meant. In one particular variant, only the first capability information is meant whenever it is generally referred to "capability information" herein.

For example, the capability information is transmitted to the NN within at least one RRC message.

In a first variant, the capability information is transmitted to the NN within a single message. Two or more of the at least one capability indicated by the capability information may be included in a same information element of the single message. Alternatively or additionally, two or more of the at least one capability indicated by the capability information may be included in separate information elements of the single message.

In a second variant, the capability information is transmitted to the NN in a plurality of messages, each of the plurality of messages comprising information indicative of only one of the at least one capability indicated by the capability information.

The capability information, before being transmitted to the NN, may be enriched by the RLCU with a first index assigned to the at least one capability indicated by the capability information, the first index associating the at least one capability indicated by the capability information with the communication unit having the at least one capability. For example, the first index is one of generated by the RLCU and obtained from the NN or a core of the network. In one example, the first index is a predefined index.

The RLCU may store a mapping between the at least one capability indicated by the capability information and at least one of a type and a unique identifier of the communication unit having the at least one capability, wherein the method may further comprise determining the first index based on the mapping.

The RLCU may stores a mapping between the at least one capability indicated by the capability information and at least one of a type and a unique identifier of the communication unit having the at least one capability, wherein the method may further comprise transmitting the mapping to the NN.

The method in one example further comprises receiving, from the NN, first configuration information indicative of a first relay path configuration for a relay path between the RMCU and the NN via the RLCU, and transmitting the first configuration information to the RMCU.

The first configuration information may be at least one of received and transmitted by the RLCU in an RRC message.

The method for example further comprises determining, based on a second index comprised in the first configuration information and associating the first relay path configuration with the RMCU, that the first relay path information is intended for the RMCU, wherein the first configuration information may be transmitted to the RMCU only if it is determined that it is intended for the RMCU.

The RLCU may store a mapping between the at least one capability indicated by the capability information and at least one of a type and a unique identifier of the communication unit having the at least one capability, and determine that the first relay path is intended for the RMCU further based on the mapping.

The method may further comprise receiving, from the NN, rejection information indicative of the NN not determining a first relay path configuration for a relay path between the RMCU and the NN via the RLCU, and transmitting the rejection information to the RMCU. The rejection information is for example at least one of received and transmitted by the RLCU in an RRC message.

The method in one example further comprises determining, based on a second index comprised in the rejection information and associating the rejection information to the RMCU, that the rejection information is intended for the RMCU, wherein the rejection information may be transmitted to the RMCU only if it is determined that it is intended for the RMCU.

The RLCU may store a mapping between the at least one capability indicated by the capability information and at least one of a type and a unique identifier of the communication unit having the at least one capability, and determine that the rejection information is intended for the RMCU further based on the mapping.

The method may further comprise obtaining, from the RMCU, the type of the RMCU.

The mapping in one example further correlates a (e.g., the) unique identifier of the RMCU and at least one of the RMCU and a (e.g., the) type of the RMCU.

According to a second aspect, there is provided a method of informing a network node, NN, of a network about at least one sidelink-related radio access capability of a remote communication unit, RMCU, to enable configuring a relay path between the RMCU and the NN via a relay communication unit, RLCU, connected to the NN. The method is performed by the RMCU and comprises transmitting, to the RLCU, first capability information indicative of at least one sidelink-related radio access capability of the RMCU for configuring the RLCU to transmit the first capability information to the NN.

The RLCU may be configured (e.g., at least one of programmed, reconfigured and triggered) to transmit the first capability information to the NN by the first capability information transmitted by the RMCU or by an instruction comprised in a message transmitted from the RMCU to the RLCU, the message further comprising the first capability information. In one variant, the RLCU is pre-set to transmit the first capability information received from the RMCU (or, e.g., received from any remote communication unit) to the NN. In this variant, the RLCU is also configured by the first capability information transmitted from the RMCU, as the first capability information needs to be transmitted to the RLCU for the RLCU to be able to transmit the first capability information to the NN.

The sidelink may be based on a PC5 interface of the RMCU. The at least one sidelink-related radio access capability of the RMCU may identify a sidelink interface of the RMCU, for example the PC5 interface of the RMCU. Alternatively or additionally, the at least one sidelink-related radio access capability of the RMCU may comprise a capability of the RMCU for establishing a sidelink connection to the RLCU connected to the NN of the network. The at least one sidelink-related radio access capability of the RMCU for example comprises a capability of the RMCU for establishing a relay path over a sidelink interface (e.g., the PC5 interface) of the RMCU, for example a relay path between the RMCU and the NN via the RLCU. The relay path between the RMCU and the NN via the RLCU may comprise a first connection between the RMCU and the RLCU and a second connection between the RLCU and the NN, wherein the first connection is established over a sidelink interface (e.g., the PC5 interface) of the RMCU and, optionally, over a sidelink interface (e.g., a PC5 interface) of the RLCU.

The first capability information is in one variant transmitted to the RLCU in a PC5-S message. The PC5-S message may be a Relay communication accept message.

The first capability information is in another variant transmitted in a PC5-RRC message. The first capability information may be transmitted during or after a sidelink unicast connection between the RMCU and the RLCU is or has been established. The first capability information may be transmitted in one of an RRCReconfigurationSidelink message, a UECapabilityEnquirySidelink message and an RRC message designated specifically for transmitting the first capability information from the RMCU to the RLCU.

In one example, the method further comprises receiving, from the RLCU, first configuration information indicative of a first relay path configuration for a relay path between the RMCU and the NN via the RLCU, and configuring a sidelink connection from the RMCU to the RLCU based on the first relay path configuration to establish the relay path between the RMCU and the NN via the RLCU.

According to a third aspect, there is provided a method of informing a network node, NN, of a network about at least one sidelink-related radio access capability of a remote communication unit, RMCU, to enable configuring a relay path between the RMCU and the NN via a relay communication unit, RLCU, connected to the NN. The method is performed by the NN and comprises receiving, from the RLCU, first capability information indicative of at least one sidelink-related radio access capability of the RMCU.

For example, the sidelink is based on a PC5 interface of the RMCU. The at least one sidelink-related radio access capability of the RMCU may identify a sidelink interface of the RMCU, for example the PC5 interface of the RMCU. Alternatively or additionally, the at least one sidelink-related radio access capability of the RMCU may comprise a capability of the RMCU for establishing a sidelink connection to the RLCU connected to the NN of the network. The at least one sidelink-related radio access capability of the RMCU for example comprises a capability of the RMCU for establishing a relay path over a sidelink interface (e.g., the PC5 interface) of the RMCU, for example a relay path between the RMCU and the NN via the RLCU. The relay path between the RMCU and the NN via the RLCU may comprise a first connection between the RMCU and the RLCU and a second connection between the RLCU and the NN, wherein the first connection is established over a sidelink interface (e.g., the PC5 interface) of the RMCU and, optionally, over a sidelink interface (e.g., a PC5 interface) of the RLCU.

The method may further comprise receiving, from the RLCU, second capability information indicative of at least one relay capability of the RLCU together with the first capability information. The at least one relay capability of the RLCU may comprise a capability of the RLCU to establish a sidelink communication (e.g., via the PC5 interface of the RLCU) to the RMCU. The at least one relay capability of the RLCU may comprise a capability of the RLCU to establish a relay path between the RMCU and the NN via the RLCU, for example using at least one interface chosen from a sidelink interface (e.g., the PC5 interface) of the RMCU and a sidelink interface (e.g., the PC5 interface) of the RLCU.

The method in one example further comprises determining, based on the received capability information, a first relay path configuration for a relay path between the RMCU and the NN via the RLCU.

For example, the method further comprises transmitting, to the RLCU, first configuration information indicative of the first relay path configuration.

The method may further comprise receiving, from the RLCU, a mapping between the at least one capability indicated by the capability information and at least one of a type and a unique identifier of the communication unit having the at least one capability, and determining, based on the mapping, a second index associating the first relay path configuration with the RMCU, wherein the first configuration information transmitted to the RLCU may further comprise the second index.

For example, the received capability information has been enriched with a first index assigned to the at least one capability indicated by the capability information, the first index associating the at least one capability indicated by the capability information with the communication unit having the at least one capability, wherein the method further may comprise determining, based on the first index, a second index associating the first relay path configuration with the RMCU, wherein the first configuration information for example further comprises the second index.

The method may further comprise receiving, from a second RMCU, via the RLCU, property information indicative of at least one sidelink-related radio access capability of the second RMCU, determining, based on at least the property information, a second relay path configuration for a relay path between the second RMCU and the NN via the RLCU, and transmitting, to the RLCU, second configuration information indicative of the second relay path configuration. In this case, the sidelink may be based on a PC5 interface of the second RMCU. The at least one sidelink-related radio access capability of the second RMCU may identify a sidelink interface of the second RMCU, for example the PC5 interface of the second RMCU. Alternatively or additionally, the at least one sidelink-related radio access capability of the second RMCU may comprise a capability of the second RMCU for establishing a sidelink connection to the RLCU connected to the NN of the network. The at least one sidelink-related radio access capability of the second RMCU for example comprises a capability of the second RMCU for establishing a relay path over a sidelink interface (e.g., the PC5 interface) of the second RMCU, for example a relay path between the second RMCU and the NN via the RLCU. The relay path between the second RMCU and the NN via the RLCU may comprise a third connection between the second RMCU and the RLCU and a fourth connection between the RLCU and the NN, wherein the third connection is established over a sidelink interface (e.g., the PC5 interface) of the second RMCU and, optionally, over a sidelink interface (e.g., a PC5 interface) of the RLCU.

In a first variant, the first configuration information and the second configuration information are transmitted in a same message. For example, the same message is an RRC message.

In a second variant, each of the first configuration information and the second configuration information is transmitted in a different message. The first configuration information and the second configuration information may be transmitted to the RLCU in the same order as the first capability information and the property information have been received by the NN. Alternatively or additionally, each of the different messages is an RRC message.

For example, the first configuration information comprises more than one second index, the more than one second index associating the first relay path configuration with both the RMCU and the second RMCU.

The method may further comprise determining, based on the received capability information, that a relay path between the RMCU and the NN via the RLCU cannot be configured, and transmitting, to the RMCU and via the RLCU, rejection information indicative of the NN not determining a first relay path configuration for a relay path between the RMCU and the NN via the RLCU. The rejection information may be transmitted in an RRC message.

The following features may be part of one or more of the methods according to the first, the second and the third aspect.

In a first variant, the RMCU has no end-to-end connection to the network node when the first capability information is transmitted or received. The first capability information may be transmitted in a message triggering establishment of a relay path between the RMCU and the NN via the RLCU.

In a second variant, the RMCU has an established end-to-end connection to the network node when the first capability information is transmitted or received. The end-to-end connection may be established based on a predetermined relay path configuration. In one example, the end-to-end connection is established irrespective of the at least one sidelink-related radio access capability of the RMCU indicated by the first capability information. The first capability information may be transmitted via an Uu interface of the RMCU. The first capability information may be transmitted within a message triggering reconfiguration of the end-to-end connection between the RMCU and the NN as a relay path between the RMCU and the NN via the RLCU (e.g., using a sidelink interface of the RMCU).

The first index may represented by at least one of the following parameters:
- an integer assigned by the RLCU;
- a layer-2, L2, destination identifier (e.g., of the NN);
- a layer-2, L2, source identifier (e.g., of the RMCU or the RLCU);
- an integer indicating a type or category of the communication unit (e.g., the RMCU or the RLCU);
- a locally or globally unique identifier of the communication unit (e.g., the RMCU or the RLCU); and
- a Cast type (e.g., a type of sidelink transmission such as unicast, groupcast or broadcast, for example a type of sidelink transmission between the RMCU and the RLCU).

In one example, the first index assigns, to the at least one capability, a unique identifier of the communication unit having the at least one capability. Alternatively, the first index may be a unique identifier of the communication unit having the at least one capability.

For example, the first index is represented by an User Equipment, UE, Radio Capability identifier, ID, identifying a set of capabilities of the communication unit having the at least one capability.

The first capability information is in one example transmitted only after having been enriched, by one of the RLCU and the RMCU, with only the UE Radio Capability ID identifying a set of capabilities of the RMCU.

For example, the first capability information is transmitted only after having been enriched, by one of the RLCU and the RMCU, with both the unique identifier of the RMCU and the UE Radio Capability ID identifying a set of capabilities of the RMCU.

According to a fourth aspect, there is provided a relay communication unit, RLCU, configured for informing a network node, NN, of a network about at least one sidelink-related radio access capability of a remote communication unit, RMCU, to enable configuring a relay path between the RMCU and the NN via the RLCU connected to the NN. The RLCU comprises an interface configured to receive, from the RMCU, first capability information indicative of at least one sidelink-related radio access capability of the RMCU, and at least one processor configured to trigger transmission of the first capability information to the NN, wherein the interface is further configured to transmit the first capability information to the NN.

The RLCU may be configured to perform the method of the first aspect.

According to a fifth aspect, there is provided a remote communication unit, RMCU, configured for informing a network node, NN, of a network about at least one sidelink-related radio access capability of the RMCU, to enable configuring a relay path between the RMCU and the NN via a relay communication unit, RLCU, connected to the NN. The RMCU comprises at least one processor configured to trigger transmission, to the RLCU, of first capability information indicative of at least one sidelink-related radio access capability of the RMCU so as to configure the RLCU for transmission of the first capability information to the NN, and an interface configured to transmit the first capability information to the RLCU.

The RMCU may be configured to perform the method of the second aspect.

According to a sixth aspect, there is provided a network node, NN, of a network, configured for being informed about at least one sidelink-related radio access capability of a remote communication unit, RMCU, to enable configuring a relay path between the RMCU and the NN via a relay communication unit, RLCU, connected to the NN. The NN comprises an interface configured to receive, from the RLCU, first capability information indicative of at least one sidelink-related radio access capability of the RMCU.

The NN may be configured to perform the method of the third aspect.

According to a seventh aspect, there is provided a system comprising at least two components chosen from the relay communication unit of the fourth aspect, the remote communication unit of the fifth aspect, and the network node of the sixth aspect.

According to an eighth aspect, there is provided a computer program comprising instructions which, when the program is executed by a processor, cause the processor to carry out the method of one of the first, the second and the third aspect. There may be provided a computer program product comprising instructions which, when the program is executed by a processor, cause the processor to carry out the method of one of the first, the second and the third aspect.

According to a ninth aspect, there is provided a computer-readable data carrier having stored thereon the computer program of the eighth aspect. The computer-readable data carrier may be a data carrier signal, a signal wave or a (e.g., non-transitory) storage medium.

### Brief Description of the Drawings

Further aspects, details and advantages of the present disclosure will become apparent from the detailed description of exemplary embodiments below and from the drawings, wherein:
- Fig. 1: illustrates an exemplary use scenario in accordance with the present disclosure;
- Fig. 2: illustrates an exemplary system in accordance with the present disclosure;
- Figs. 3 to 7: illustrate different exemplary methods in accordance with the present disclosure;
- Fig. 8: illustrates an exemplary relay communication unit in accordance with the present disclosure;
- Fig. 9: illustrates an exemplary remote communication unit in accordance with the present disclosure;
- Fig. 10: illustrates an exemplary network node in accordance with the present disclosure;
- Fig. 11: illustrates an exemplary method in accordance with the present disclosure, which is performed by a relay communication unit;
- Fig. 12: illustrates an exemplary method in accordance with the present disclosure, which is performed by a remote communication unit;
- Fig. 13: illustrates an exemplary method in accordance with the present disclosure, which is performed by a network node;
- Fig. 14: illustrates an exemplary method in accordance with the present disclosure, which is performed by a system; and
- Fig. 15: illustrates an exemplary method in accordance with the present disclosure, which is performed by a system.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

While, for example, some embodiments of the following description may focus on an exemplary network configuration in accordance with 5G specifications, the present disclosure is not limited in this regard. The present disclosure could be implemented in cellular or non-cellular wireless communication networks complying for example with Long Term Evolution (LTE) or New Radio (NR) specifications.

Those skilled in the art will further appreciate that the steps, services and functions explained herein may be implemented using individual hardware circuits, using software functioning in conjunction with a programmed microprocessor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by one or more processors.

In the following description of exemplary embodiments, the same reference numerals denote the same or similar components.

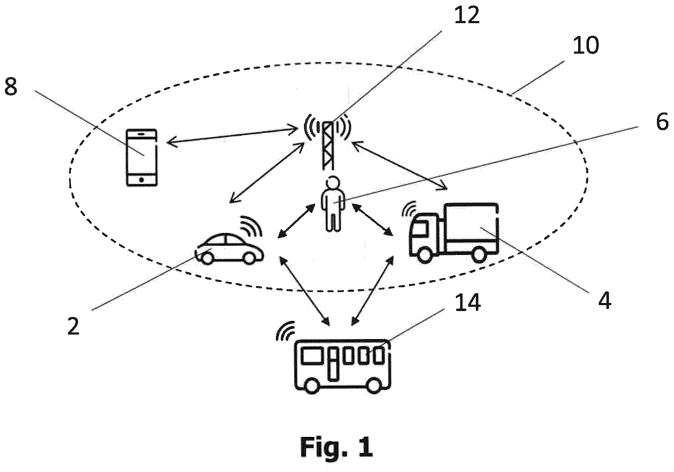

Fig. 1 illustrates an exemplary use scenario in accordance with the present disclosure. Vehicles 2 and 4, a pedestrian 6 carrying a User Equipment (UE), and a UE 8 are within a range of coverage 10 of a network node (NN) 12. Meanwhile, another vehicle 14 is situated outside the range of coverage 10. The NN 12 may provide a Long Term Evolution (LTE)-based connection to a network (not shown), of which the NN is part. Of course, the NN may alternatively provide a New Radio (NR)-based network connection or a network connection of another Radio Access Technology (RAT).

In the given example, only the vehicles 2 and 4 and the UE 8 can establish an end-to-end connection to the NN 12. The vehicle 14 can perform device-to-device (D2D) communication with the vehicle 4. This case of D2D is commonly referred to as vehicle-to-vehicle (V2V) communication. The vehicle 14 can also perform V2V communication with the vehicle 2. Each of the vehicles 2 and 4 can perform vehicle-to-pedestrian (V2P) communication with the UE carried by the pedestrian 6.

It may therefore be advantageous to provide the vehicle 14 or the pedestrian 6 with a connection to the network using a relay path. In the shown example, the vehicle 14 or the pedestrian 6 may each be connected to the network using a relay path via the vehicle 2 or a relay path via the vehicle 4. Note that each of the vehicles 2, 4, 14, the UE 8 and the UE carried by the pedestrian 6 may be referred to as communication units. In the field of relay communication, the intermediate communication unit providing the link between a remote communication unit and the network or NN can be referred to as "relay communication unit". For example, in case of a relay path between the vehicle 14 and the NN 12 via the vehicle 2, the vehicle 14 corresponds to a remote communication unit (RMCU) and the vehicle 2 corresponds to a relay communication unit (RLCU).

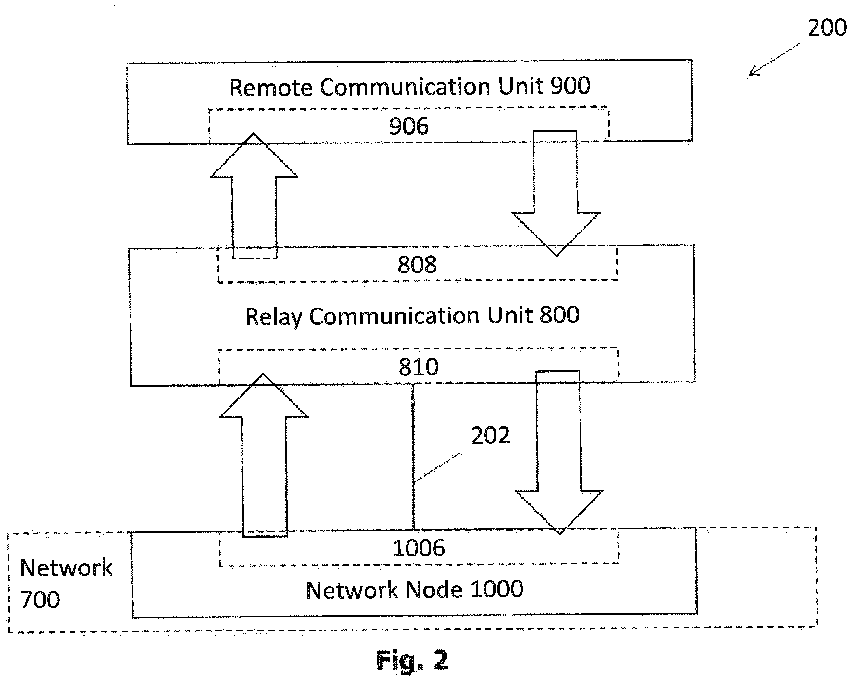

Fig. 2 illustrates an exemplary system 200, in which the techniques in accordance with the present disclosure can be implemented. The system 200 comprises a relay communication unit (RLCU) 800, a remote communication unit (RMCU) 900 and a network node (NN) 1000 of a network 700. The RLCU 800 is connected to the NN 1000 by a communication connection (CC) 202 and can communicate with the NN over the CC 202. The CC 202 may be an LTE connection, a NR-based connection or the like.

As can be seen, the RMCU 900 comprises an interface 906, the RLCU comprises a first interface 808 and a second interface 810, and the NN 1000 comprises an interface 1006. Note that the first and the second interface 808, 810 of the RLCU 800 may be comprised in an interface 806 of the RLCU (not shown). The interface 906 may comprise a sidelink interface of the RMCU 900, for example a PC5 interface. Similarly, the interface 808 may comprise a sidelink interface of the RLCU 800, for example a PC5 interface. The arrows indicate signaling paths between the interface 906 of the RMCU 900 and the interface 808 of the RLCU 800, and between the interface 810 of the RLCU 800 and the interface 1006 of the NN 1000, respectively.

Note that data or information may be transmitted in the direction of one or more of the arrows wirelessly. That is, the RMCU 900, the RLCU 800 and the NN 1000 may be wireless communication units. The NN 1000 may provide a wireless communication network such as a mobile (e.g., a cellular) communication network. For example, the NN 1000 is an eNB or a gNB. At least one of the RMCU and the RLCU may be a User Equipment (UE). The RLCU may be an intermediate NN or a mobile terminal such as a UE.

Referring back to the use scenario described above with reference to Fig. 1, the RMCU 900 may not have or not be able to establish, to the NN 1000, a direct end-to-end connection having a required Quality-of-Service (QoS). Thus, a relay path may be established or configured between the RMCU 900 and the NN 1000 via the RLCU 800. As described above, In accordance with the present disclosure, the NN 1000 may be informed about at least one sidelink-related capability of the RMCU 900. This may enable or improve configuring the relay path between the RMCU 900 and the NN 1000 via the RLCU 800. The relay path may comprise a sidelink connection between the RMCU 900 and the RLCU 800 and further comprise or use the connection 202 between the RLCU 800 and the NN 1000.

Sidelink transmissions may be associated with a source layer-1 (L1) / layer-2 (L2) identifier (ID) and a destination L1/L2 ID. For sidelink unicast, source L1/L2 ID may represent the service type and/or transmitter UE ID, which may become the destination L1/L2 ID of the peer UE (in the current example, the RLCU 800). A sidelink unicast link may be identified by the combination of source L1/L2 ID and destination L1/L2 ID. For sidelink groupcast, source L1/L2 ID may represent the transmitter UE ID, and destination L1/L2 ID may represents a group identifier provided by an upper layer or a service type. For sidelink broadcast, source L1/L2 ID may represent the transmitter UE ID, and destination L1/L2 ID may represent the service type. A connected UE (e.g., the RMCU 900 or the RLCU 800) may report the destination L2 ID to its serving cell or NN (e.g., the NN 1000).

Some sidelink Access Stratum (AS)-level information, such as UE capabilities and AS-layer configurations, may be exchanged between UEs performing sidelink unicast, e.g., between the RMCU 900 and the RLCU 800. The AS-level information could be exchanged over sidelink using RRC signaling, e.g., a PC5-RRC message. The PC5 message may be sent over a PC5 sidelink interface of the RMCU 900 to the RLCU 800. The PC5-RRC message may be sent during or after a sidelink unicast link setup between the RMCU 900 and the RLCU 800.

In case the RMCU 900 is RRC connected to the RLCU 800, some sidelink AS-level information (e.g. supported sidelink RATs, QoS-related information and configurations) may be exchanged between the NN 1000 and the RLCU 900 and/or the RMCU 900 over an Uu interface.

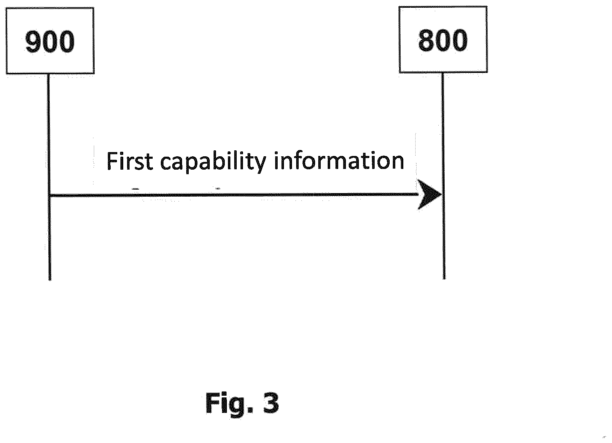

With reference to Figs. 3 to 7, different methods in accordance with the present disclosure for exchanging first capability information between the RMCU 900 and the RLCU 800 will be described, wherein the first capability information is indicative of at least one sidelink-related radio access capability of the RMCU 900.

As shown in Fig. 3, PC5-RRC based UE capability transfer can be done in a one-way manner. In the one-way case, the RMCU 900 that wants to transmit the first capability information directly initiates the transmission to the peer UE (the RLCU 800 in Fig. 3) and transmits the first capability information to the RLCU 800, for example over a sidelink between the RMCU 900 and the RLCU 800.

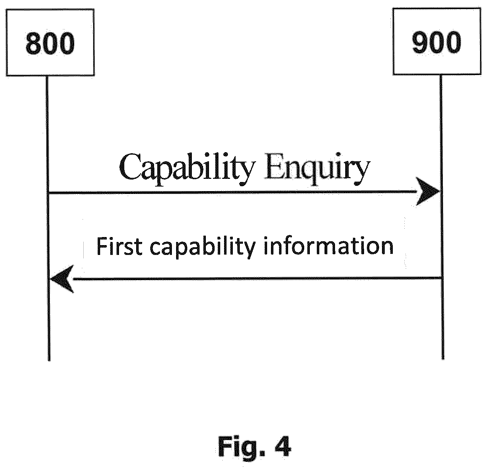

Fig. 4 shows a two-way transfer of capability information, wherein the RLCU 800 first sends a capability enquiry message to request capability information transfer from the RMCU 900, and then the RMCU 900 sends the first capability information to the RMCU 900, for example over a sidelink between the RMCU 900 and the RLCU 800, based on the received capability enquiry.

The method of Figs. 3 and 4 are suitable for uni-directional cases, where the capability information of a UE (e.g., the first capability information of the RMCU 900) is only transferred in one direction (e.g., from the RMCU 900 to the RLCU 800). On the other hand, in some cases, for example when there is bi-directional sidelink traffic between the RMCU 900 and the RLCU 800, a bi-directional procedure may be needed. In this case, not only the RMCU 900 may transmit the first capability information to the RLCU 800, but the RLCU 800 may also transmit second capability information to RMCU 900, the second capability information indicative of at least one capability of the RLCU 800 (e.g., a relay capability or a sidelink-related capability).

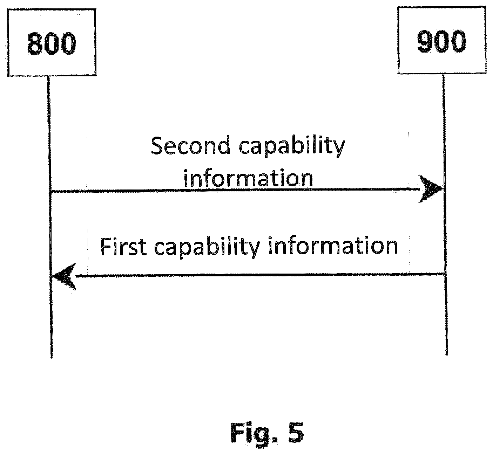

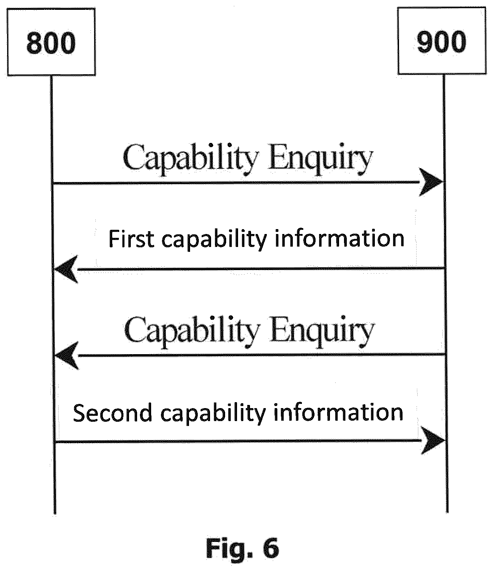

Fig. 5 shows such a bi-directional procedure for a one-way UE capability information transfer, whereas Fig. 6 shows the bi-directional procedure for a two-way UE capability information transfer. Note that the sequence of steps is exemplary and may be changed.

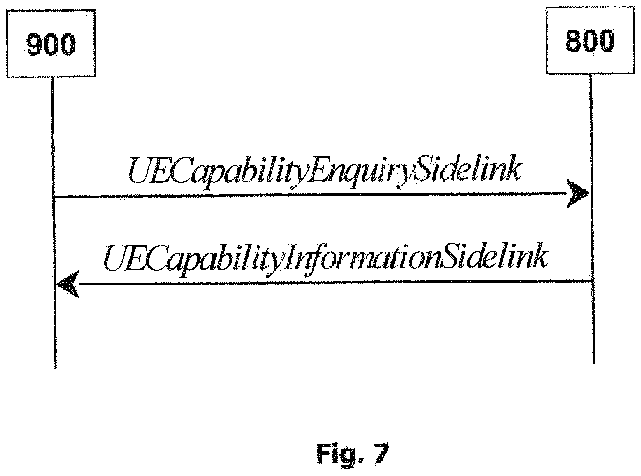

Referring to Fig. 7, it will be described how the RMCU 900 compiles and transfers the first capability information for unicast to the RLCU 800.

The RMCU 900 may initiate the procedure for transferring the first capability information upon indication from the upper layer when it needs (additional, e.g. radio access) capability information from the RLCU 800. As can be seen, the RMCU 900 transmits an UECapabilityEnquirySidelink message to the RLCU 800. The UECapabilityEnquirySidelink message may comprise the first capability information comprising for example UE radio access capabilities for sidelink of the RMCU 900. The first capability information may be included within a message field or section "ueCapabilityInformationSidelink" of the UECapabilityEnquirySidelink message. The RMCU 900 may set a message field or section "frequencyBandListFilterSidelink" of the UECapabilityEnquirySidelink message to include frequency bands for which the peer UE (i.e., the RLCU 800) is requested to provide supported bands and band combinations. The RMCU 900 may submit the UECapabilityEnquirySidelink message to lower layers for transmission. Note that it is up to RMCU 900 to decide whether the "ueCapabilityInformationSidelink" should be included in the UECapabilityEnquirySidelink message.

As shown in Fig. 7, the RLCU 800 transmits a UECapabilityInformationSidelink message to the RMCU 900. The UECapabilityInformationSidelink message may comprise at least one of the first capability information and the second capability information described herein. The UECapabilityInformationSidelink message may comprise UE radio access capabilities for sidelink of the RLCU 800. Some or all of the aforementioned information may be included within a message field or section "ueCapabilityInformationSidelink" of the UECapabilityInformationSidelink message. The RLCU 800 may compile a list of candidate band combinations, only consisting of bands included in a message field or section "frequencyBandListFilter" (e.g., of an UECapabilityEnquiry message), and prioritized in the order of the "frequencyBandListFilterSidelink" message field or section of the UECapabilityEnquirySidelink message (e.g., first include band combinations containing the first-listed band, then include remaining band combinations containing the second-listed band, and so on). The RLCU 800 may include into a "supportedBandCombinationListSidelink" message field or section of the UECapabilityInformationSidelink message as many band combinations as possible from the list of candidate band combinations, starting from the first entry. The RLCU 800 may submit the UECapabilityInformationSidelink message to lower layers for transmission.

Note that in another variant, the RMCU 900 takes the role of the RLCU 800 described with reference to Fig. 7, and the RLCU 800 takes the role of the RMCU 900 described with reference to Fig. 7. In this case, the RMCU 900 may transmit the first capability information to the RLCU 800 within the UECapabilityInformationSidelink message.

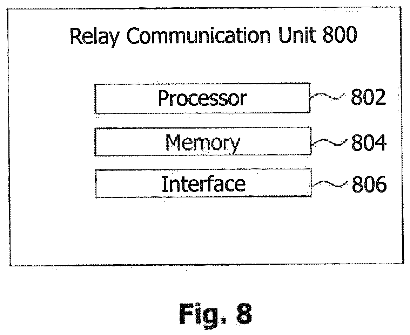

Fig. 8 illustrates a schematic view of the RLCU 800. The RLCU 800 comprises a processor 802, a memory 804 and an interface 806. The memory 804 comprises instructions which, when executed by the processor 802, cause the processor 802 to perform one or more of the methods described herein. As understood herein, a processor, such as the processor 802, may be implemented using any processing circuitry and is not limited to, for example, a single processing core but may also have a distributed topology. The RLCU 800 is configured for informing the NN 1000 of the network 700 about the at least one sidelink-related radio access capability of the RMCU 900, to enable configuring a relay path between the RMCU 900 and the NN 1000 via the RLCU 800 connected to the NN 1000. The interface 806 is configured to receive, from the RMCU 900, the first capability information indicative of the at least one sidelink-related radio access capability of the RMCU 900. The processor 802 is configured to trigger transmission of the first capability information to the NN 1000. The interface 806 is further configured to transmit the first capability information to the NN 1000.

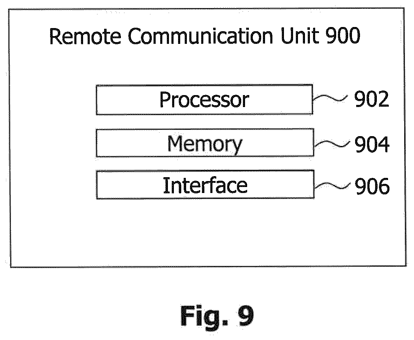

Fig. 9 illustrates a schematic view of the RMCU 900. The RMCU 900 comprises a processor 902, a memory 904 and an interface 906. The memory 904 comprises instructions which, when executed by the processor 902, cause the processor 902 to perform one or more of the methods described herein. The RMCU 900 is configured for informing the NN 1000 of the network 700 about the at least one sidelink-related radio access capability of the RMCU 900, to enable configuring a relay path between the RMCU 900 and the NN 1000 via the RLCU 800 connected to the NN 1000. The processor 902 is configured to trigger transmission, to the RLCU 800, of the first capability information indicative of the at least one sidelink-related radio access capability of the RMCU 900 so as to configure the RLCU 800 for transmission of the first capability information to the NN 1000. The interface 906 is configured to transmit the first capability information to the RLCU 800.

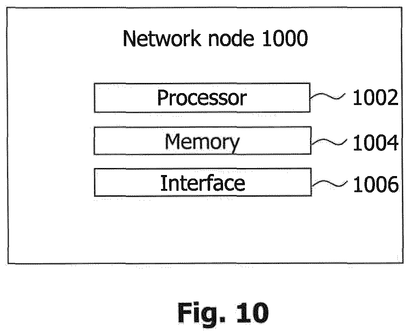

Fig. 10 illustrates a schematic view of the NN 1000. The NN 1000 comprises a processor 1002, a memory 1004 and an interface 1006. The memory 1004 comprises instructions which, when executed by the processor 1002, cause the processor 1002 to perform one or more of the methods described herein. The NN 1000 of the network 700 is configured for being informed about the at least one sidelink-related radio access capability of the RMCU 900 to enable configuring a relay path between the RMCU 900 and the NN 100 via the RLCU 800 connected to the NN 1000. The interface 1006 is configured to receive, from the RLCU 800, the first capability information indicative of the at least one sidelink-related radio access capability of the RMCU 900.

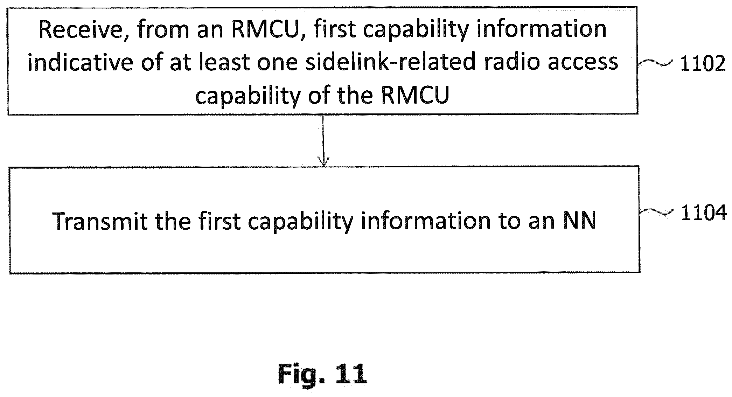

Fig. 11 illustrates an exemplary method embodiment in accordance with the present disclosure. The method shown in Fig. 11 may be performed by the RLCU 800. In a step 1102, the RLCU 800 receives, from the RMCU 900, the first capability information indicative of the at least one sidelink-related radio access capability of the RMCU 900. In a step 1104, the RLCU 800 transmits the first capability information to the NN 1000.

For example, the sidelink is based on a PC5 interface of the RMCU 900. The at least one sidelink-related radio access capability of the RMCU 900 may identify a sidelink interface of the RMCU 900, for example the PC5 interface of the RMCU 900. Alternatively or additionally, the at least one sidelink-related radio access capability of the RMCU 900 may comprise a capability of the RMCU 900 for establishing a sidelink connection to the RLCU 800 connected to the NN 1000 of the network 700. The at least one sidelink-related radio access capability of the RMCU 900 for example comprises a capability of the RMCU 900 for establishing a relay path over a sidelink interface (e.g., the PC5 interface) of the RMCU 900, for example a relay path between the RMCU 900 and the NN 1000 via the RLCU 800. The relay path between the RMCU 900 and the NN 1000 via the RLCU 800 may comprise a first connection between the RMCU 900 and the RLCU 800 and a second connection between the RLCU 800 and the NN 1000, wherein the first connection is established over a sidelink interface (e.g., the PC5 interface) of the RMCU 900 and, optionally, over a sidelink interface (e.g., a PC5 interface) of the RLCU 800.

The method may further comprise transmitting, to the NN 1000, the second capability information indicative of at least one relay capability of the RLCU 800, together with the first capability information. For example, the (e.g., at least one of first and second) capability information is transmitted to the NN 1000 within at least one RRC message.

In a first variant, the (e.g., at least one of first and second) capability information is transmitted to the NN 1000 within a single message. Two or more of the at least one capability indicated by the (e.g., at least one of first and second) capability information may be included in a same information element of the single message. Alternatively or additionally, two or more of the at least one capability indicated by the (e.g., at least one of first and second) capability information may be included in separate information elements of the single message.

In a second variant, the (e.g., at least one of first and second) capability information is transmitted to the NN 1000 in a plurality of messages, each of the plurality of messages comprising information indicative of only one of the at least one capability indicated by the (e.g., at least one of first and second) capability information.

The (e.g., at least one of first and second) capability information, before being transmitted to the NN 1000, may be enriched by the RLCU 800 with a first index assigned to the at least one capability indicated by the (e.g., at least one of first and second) capability information, the first index associating the at least one capability indicated by the (e.g., at least one of first and second) capability information with the communication unit having the at least one capability. For example, the first capability information may be enriched with the first index assigned to the at least one sidelink-related radio access capability of the RMCU 900 and associates the at least one sidelink-related radio access capability of the RMCU 900 to the RMCU 900. For example, the first index is one of generated by the RLCU 800 and obtained from the NN 1000 or a core of the network 700. In one example, the first index is a predefined index. The first index may be written into the first capability information to enrich the first capability information. Alternatively or additionally, the first index may be written into the second capability information to enrich the second capability information.

The RLCU 800 may store a mapping between the at least one capability indicated by the (e.g., at least one of first and second) capability information and at least one of a type and a unique identifier of the communication unit (e.g., the RMCU 900 or the RLCU 800) having the at least one capability indicated by the same capability information, wherein the method may further comprise determining the first index based on the mapping. For example, the mapping is between the at least one sidelink-related radio access capability of the RMCU 900 and the type of the RMCU 900.

The method may further comprise transmitting the mapping to the NN 1000.

The method in one example further comprises receiving, from the NN 1000, first configuration information indicative of a first relay path configuration for a relay path between the RMCU 900 and the NN 1000 via the RLCU 800, and transmitting the first configuration information to the RMCU 900.

The first configuration information may be at least one of received and transmitted by the RLCU 800 in an RRC message.

The method for example further comprises determining, based on a second index comprised in the first configuration information and associating the first relay path configuration with the RMCU 900, that the first relay path information is intended for the RMCU 900, wherein the first configuration information may be transmitted to the RMCU 900 only if it is determined that it is intended for the RMCU 900.

The method may comprise determining that the first relay path is intended for the RMCU 900 further based on the mapping.

The method may further comprise receiving, from the NN 1000, rejection information indicative of the NN 1000 not determining a first relay path configuration for a relay path between the RMCU 900 and the NN 1000 via the RLCU 800, and transmitting the rejection information to the RMCU 900. The rejection information is for example at least one of received and transmitted by the RLCU 800 in an RRC message.

The method in one example further comprises determining, based on a second index comprised in the rejection information and associating the rejection information to the RMCU 900, that the rejection information is intended for the RMCU 900, wherein the rejection information may be transmitted to the RMCU 900 only if it is determined that it is intended for the RMCU 900.

The RLCU 800 may determine that the rejection information is intended for the RMCU 900 further based on the mapping.

The method may further comprise obtaining, from the RMCU 900, the type or unique ID of the RMCU 900.

The mapping in one example further correlates the unique ID of the RMCU 900 and at least one of the RMCU 900 and a type of the RMCU 900.

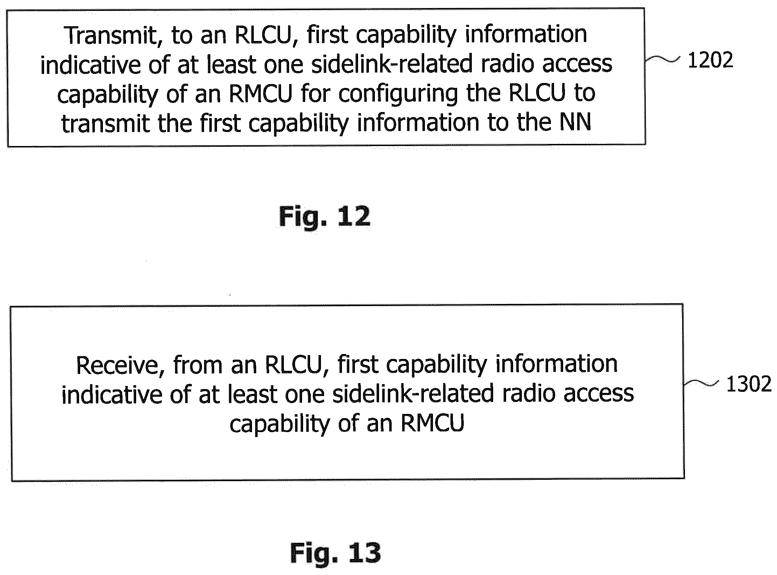

Fig. 12 illustrates an exemplary method embodiment in accordance with the present disclosure. The method shown in Fig. 12 may be performed by the RMCU 900. In a step 1202, the RMCU 900 transmits, to the RLCU 800, the first capability information indicative of the at least one sidelink-related radio access capability of the RMCU 900 for configuring the RLCU 800 to transmit the first capability information to the NN 1000.

The RLCU 800 may be configured (i.e., at least one of programmed, reconfigured and triggered) by the transmitted first capability information or by an indication comprised in a message transmitted from the RMCU 900 to the RLCU 800, the message further comprising the first capability information. In one variant, the RLCU 800 is pre-set to transmit any first capability information received from the RMCU 900 (or, e.g., received from any other RMCU) to the NN 100. In this variant, the first capability information needs to be transmitted to the RLCU 800 to configure to RLCU 800 to transmit the first capability information to the NN 1000, as the RLCU 800 does not know the first capability information otherwise and then cannot transmit it to the NN 1000.

The first capability information is in one variant transmitted to the RLCU in a PC5-S message. The PC5-S message may be a Relay communication accept message.

The first capability information is in another variant transmitted in a PC5-RRC message. The first capability information may be transmitted during or after a sidelink unicast connection between the RMCU 900 and the RLCU 800 is or has been established. The first capability information may be transmitted in one of an RRCReconfigurationSidelink message, a UECapabilityEnquirySidelink message and an RRC message designated specifically for transmitting the first capability information from the RMCU 900 to the RLCU 800.

In one example, the method further comprises receiving, from the RLCU 800, the first configuration information indicative of the first relay path configuration for the relay path between the RMCU 900 and the NN 1000 via the RLCU 800, and configuring a sidelink connection from the RMCU 900 to the RLCU 800 based on the first relay path configuration to establish the relay path between the RMCU 900 and the NN 1000 via the RLCU 800.

Fig. 13 illustrates an exemplary method embodiment in accordance with the present disclosure. The method shown in Fig. 13 may be performed by the NN 1000. In a step 1302, the NN 1000 receives, from the RLCU 800, the first capability information indicative of the at least one sidelink-related radio access capability of the RMCU 900.

The method may further comprise receiving, from the RLCU 800, the second capability information indicative of the at least one relay capability of the RLCU 800 together with the first capability information. The at least one relay capability of the RLCU 800 may be a capability of the RLCU 800 to establish a relay path between the RMCU 900 and the NN 1000 via the RLCU 800, for example using at least one interface chosen from a sidelink interface (e.g., the PC5 interface) of the RMCU 900 and a sidelink interface (e.g., the PC5 interface) of the RLCU 800.

The method in one example further comprises determining, based on the received (e.g., at least one of first and second) capability information, the first relay path configuration for the relay path between the RMCU 900 and the NN 1000 via the RLCU 800.

For example, the method further comprises transmitting, to the RLCU 800, the first configuration information indicative of the first relay path configuration.

The method may further comprise receiving, from the RLCU 800, the mapping stored by the RLCU 800, and determining, based on the mapping, a second index associating the first relay path configuration with the RMCU 900, wherein the first configuration information transmitted to the RLCU 800 may further comprise the second index. For example, the NN 1000 receives, from the RLCU 800, the mapping between the at least one sidelink-related radio access capability of the RMCU 900 and the type (or, alternatively, the unique ID) of the RMCU 900 and determines the second index based on the mapping.

For example, the received (e.g., at least one of first and second) capability information has been enriched (e.g., by the RLCU 800) with the first index assigned to the at least one capability indicated by the (e.g., at least one of first and second) capability information. As noted above, the first index associates the at least one capability indicated by the (e.g., at least one of first and second) capability information with the communication unit having the at least one capability (e.g., the RMCU 900 or the RLCU) indicated by the same capability information. The method may further comprise determining, based on the first index, the second index associating the first relay path configuration with the RMCU 900, wherein the first configuration information for example further comprises the second index.

The method may further comprise receiving, from a second RMCU (not shown), via the RLCU 800, property information indicative of at least one sidelink-related radio access capability of the second RMCU, determining, based on at least the property information, a second relay path configuration for a relay path between the second RMCU and the NN 1000 via the RLCU 800, and transmitting, to the RLCU 800, second configuration information indicative of the second relay path configuration.

In a first variant, the first configuration information and the second configuration information are transmitted in a same message. For example, the same message is an RRC message.

In a second variant, each of the first configuration information and the second configuration information is transmitted in a different message. The first configuration information and the second configuration information may be transmitted to the RLCU 800 in the same order as the first capability information and the property information have been received by the NN 1000. Alternatively or additionally, each of the different messages is an RRC message.

For example, the first configuration information comprises more than one second index, the more than one second index associating the first relay path configuration with both the RMCU 900 and the second RMCU.

The method may further comprise determining, based on the received (e.g., at least one of first and second) capability information, that a relay path between the RMCU 900 and the NN 1000 via the RLCU 800 cannot be configured, and transmitting, to the RMCU 900 and via the RLCU 800, the rejection information indicative of the NN 1000 not determining the first relay path configuration for the relay path between the RMCU 900 and the NN 1000 via the RLCU 800. The rejection information may be transmitted in an RRC message.

The following may apply to any of the methods described herein, irrespective of which entity (e.g., the RMCU 900, the RLCU 800 or the NN 1000) performs the method.

In a first variant, the RMCU 900 has no end-to-end connection to the NN 1000 when the first capability information is transmitted or received. The first capability information may be transmitted in a message triggering establishment of a relay path between the RMCU 900 and the NN 1000 via the RLCU 800, the relay path for example using or extending over a sidelink interface (e.g., the PC5 interface) of the RMCU 900.

In a second variant, the RMCU 900 has an established end-to-end connection to the NN 1000 when the first capability information is transmitted or received, for example an end-to-end connection via the RLCU 800. The end-to-end connection may be established based on a predetermined relay path configuration. In one example, the end-to-end connection is established irrespective of the at least one sidelink-related radio access capability of the RMCU 900 indicated by the first capability information. The first capability information in this case may be transmitted via an Uu interface of the RMCU 900. The first capability information may be transmitted within a message triggering reconfiguration of the end-to-end connection between the RMCU 900 and the NN 1000 as a relay path between the RMCU 900 and the NN 1000 via the RLCU 800, the relay path for example using or extending over a sidelink interface (e.g., the PC5 interface) of the RMCU 900.

The first index may represented by at least one of the following parameters:
- an integer assigned by the RLCU 800;
- a layer-2, L2, destination identifier (e.g., of the NN 1000);
- a layer-2, L2, source identifier (e.g., of the RMCU 900 or the RLCU 800);
- an integer indicating a type or category of the communication unit (e.g., the RMCU 900 or the RLCU 800);
- a locally or globally unique identifier of the communication unit (e.g., the RMCU 900 or the RLCU 800); and
- a Cast type (e.g., a type of sidelink transmission such as unicast, groupcast or broadcast).

In one example, the first index assigns, to the at least one capability indicated by the capability information, a unique ID of the communication unit having the at least one capability indicated by the same capability information. Alternatively, the first index may comprise or be a unique ID of the communication unit (e.g., the RMCU 900 or the RLCU 800) having the at least one capability indicated by the capability information.

For example, the first index is represented by an User Equipment, UE, Radio Capability identifier, ID, identifying a set of capabilities of the communication unit (e.g., the RMCU 900 or the RLCU 800) having the at least one capability indicated by the capability information.

The first capability information is in one example transmitted only after having been enriched, by one of the RLCU 800 and the RMCU 900, with only the UE Radio Capability ID identifying a set of capabilities of the RMCU 900.

For example, the first capability information is transmitted only after having been enriched, by one of the RLCU 800 and the RMCU 900, with both the unique identifier of the RMCU 900 and the UE Radio Capability ID identifying a set of capabilities of the RMCU 900.

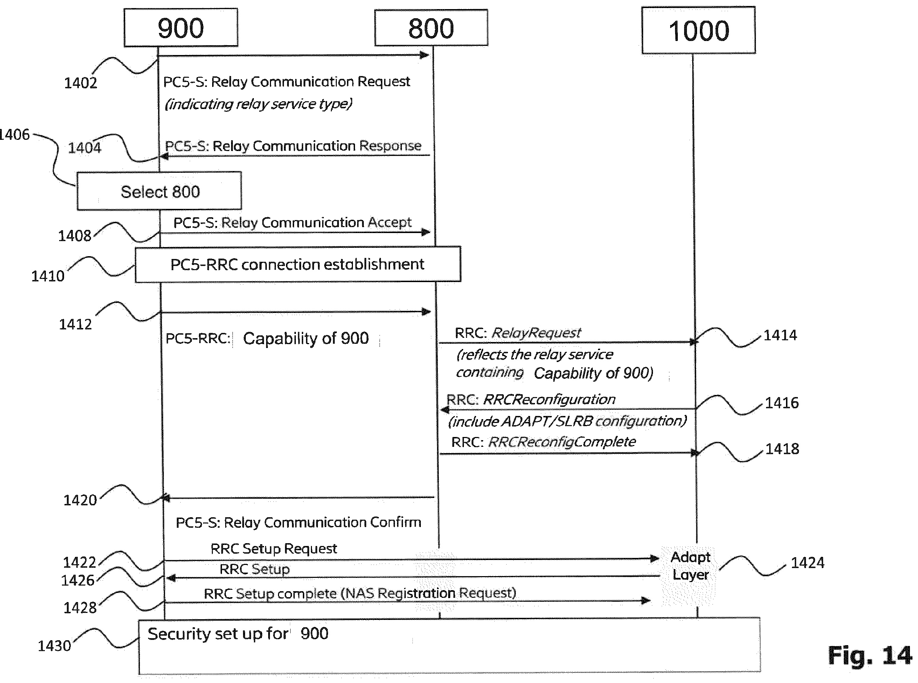

Fig. 14 illustrates an exemplary method embodiment in accordance with the present disclosure. The method shown in Fig. 13 may be performed by the system 200. In step 1402, the RMCU 900 transmits a PC5-S Relay Communication Request message to the RLCU 800. The PC5-S Relay Communication Request message may indicate the relay service type (i.e., the type of traffic (e.g., Ultra-Reliable and Low Latency Communication (URLCC) or enhanced Mobile Broadband (eMBB)) for which the relay path shall be established). Further information comprised in the Relay Communication Request message may be, e.g., a QoS profile or an indication of certain QoS requirements. In step 1403, the RLCU 800 transmits a PC5-S Relay Communication Response message to the RMCU 900. In step 1406, the RMCU 900 selects the RLCU 800, for example from a plurality of available RLCUs, based on the information comprised in the PC5-S Relay Communication Response message. In step 1408, the RMCU 900 transmits a PC5-S Relay Communication Accept message to the RLCU 800. In step 1410, a PC5-RRC connection may be established between the RMCU 900 and the RLCU 800 based on the information exchanged in one or more of steps 1402 to 1408.

In step 1412, the RMCU 900 transmits the first capability information indicating the at least one sidelink-related radio access capability of the RMCU 900 to the RLCU 800 within a PC5-RRC message. In step 1414, the RLCU 800 transmits the first capability information to the NN 1000. In the shown example, the RLCU 800 transmits the first capability information received from the RMCU 900 to the NN 1000 in a RRC RelayRequest message reflecting the relay service containing the at least one sidelink-related radio access capability of the RMCU 900. In step 1416, the NN 1000 transmits to the RLCU 800 an RRCReconfiguration message as an RRC message. The RRCReconfiguration message may include or indicate a configuration for an adaptation layer and/or a sidelink radio bearer (SLRB) configuration. In step 1418, the RLCU 800 transmits, to the NN 1000, an RRCReconfigComplete message as an RRC message. In step 1420, the RLCU 800 transmits, to the RMCU 900, a Relay Communication Confirm message over PC5-S. In step 1422, the RMCU 900 transmits an RRC Setup Request message to the NN 1000 that is relayed via the RLCU 800. The NN 1000 in step 1424 establishes an adaptation layer ("Adapt Layer" in Fig. 14) in accordance with the RRC Setup Request message received from the RMCU 900. In step 1426, the NN 1000 transmits, to the RMCU 900, a RRC Setup message that is relayed via the RLCU 800. In step 1428, the RMCU 900 transmits, to the NN 1000, a RRC Setup complete message that may comprise a Non-Access Stratum (NAS) Registration Request. In step 1430, a connection between the RMCU 900 and the NN 1000 via the RLCU 800 is secured. The resulting connection may be referred to as an end-to-end connection between the RMCU 900 and the NN 1000.

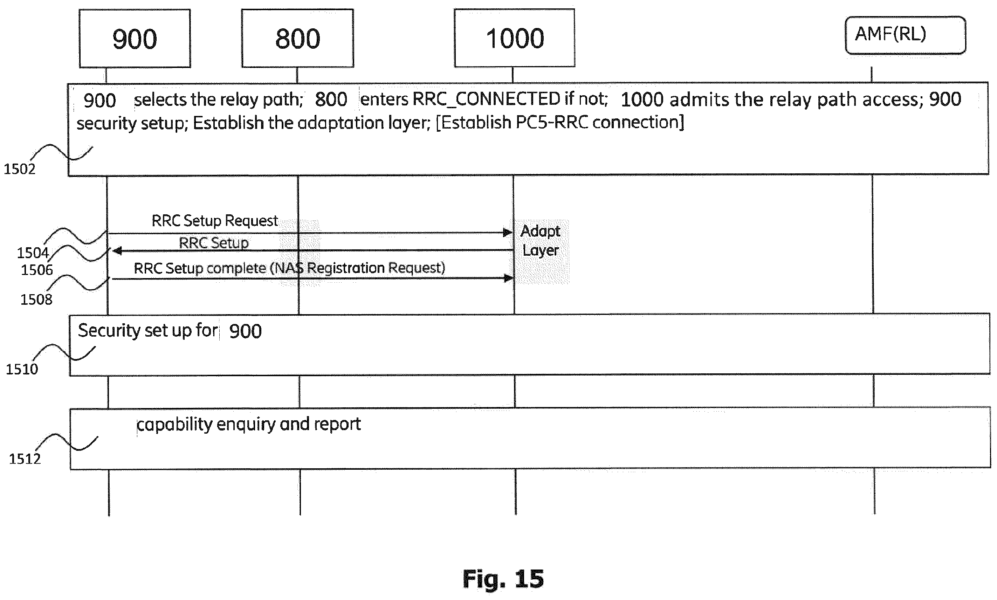

Fig. 15 illustrates an exemplary method embodiment in accordance with the present disclosure. The method shown in Fig. 13 may be performed by the system 200. In step 1520, the RMCU 900 selects a relay path (e.g., selects the RLCU 800 from a plurality of available RLCUs), and the RLCU 800 enters RRC_CONNECTED mode if it its status is different from CONNECTED (e.g., if its status is RRC_IDLE or RRC_INACTIVE). In one example, the status of the RLCU 900 is CONNECTED if it is selected by the RMCU 900. The RMCU 900 may only select the RLCU 800 if its status is CONNECTED. The NN 1000 admits the relay path access, a connection between the RMCU 900 and the NN 1000 is secured ("900 security setup" in Fig. 15) and an adaptation layer is established. Optionally, the PC5-RRC connection may be established between the RMCU 900 and the RLCU 800. In step 1504, the RMCU 900 transmits, to the NN 1000, an RRC Setup Request message that is relayed via the RLCU 800. In step 1506, the NN 1000 transmits, to the RMCU 900, a RRC Setup message that is relayed via the RLCU 800. In step 1508, the RMCU 900 transmits, to the NN 1000, a RRC Setup complete message that may comprise a Non-Access Stratum (NAS) Registration Request. In step 1510, a connection between the RMCU 900 and the NN 1000 is secured, resulting in a secured relay path forming an end-to-end connection. In step 1512, the first capability information is transmitted from the RMCU 900 to NN 1000 via the RLCU 800 using the secured relay path.

Note that in the example of Fig. 15, the end-to-end connection may be established based on a predetermined relay path configuration. This may be a basic capability set that is hard coded in the RMCU 900 or the RLCU 800 (e.g., in the memory of the respective communication unit or in a SIM card inserted in the respective communication unit).

In LTE and NR there is a UE capability signaling optimization feature that is called Resource and Admission Control Subsystem (RACS). The RACS is designed to allow user devices to request and reserve resources in an access network, essentially providing subscribers with the correct QoS for the service they are attempting to initiate. RACS provides an efficient approach to signal UE Radio Access Capability information over a radio interface and other network interfaces. RACS works by assigning an identifier to represent a set of UE radio capabilities. This identifier is called UE Radio Capability ID. A UE Radio Capability ID can be either manufacturer-assigned or PLMN-assigned, as specified e.g., in clause 5.2.7 of 3GPP TS 23.401. The UE Radio Capability ID is an alternative to the signalling of the radio capabilities container over the radio interface, within E-UTRAN, from E-UTRAN to NG-RAN, from MME to E-UTRAN and between CN nodes supporting RACS. The UE Radio Capability ID may correspond to, be comprised in, or be represented by the first index described herein.

The techniques disclosed herein may refer to the NR RAT, but may be applied also to LTE RAT and any other RAT enabling the transmission on two nearby devices. In the following, instead of to an RMCU 900, it may be referred to an "RM UE" or a "remote UE" that may need to transmit or receive a data packet from or to the NN 1000 (e.g., a gNB) via the RLCU 800. Instead of to an RLCU 800, it may be referred to an "intermediate network node", a "mobile terminal" or an "RL UE". Also, it may be referred to a "network" which is to be understood as the NN 1000 or an entity comprised in the network 700. In the following, it will be referred to a transmission of capabilities. It is to be understood that this may comprise or correspond to a transmission of the capability information or of an indication of at least one of the capabilities. One example of such a capability is the sidelink-related radio access capability of the RMCU 900 described herein.

In one embodiment, after selecting a RL UE (e.g., the RLCU 800), the RM UE (e.g., the RMCU 900) sends a PC5-S message to the RL UE (e.g., Relay communication accept) for establishing a relay path and within this message it includes its capabilities (e.g., the first capability information). Alternatively, after selecting a RL UE, the RM UE establishes a PC5-RRC link with the RL UE and then sends its own capabilities (e.g., the first capability information) within a PC5-RRC message. In one embodiment the PC5-RRC message is the RRCReconfigurationSidelink. In another embodiment, the PC5-RRC message is the UECapabilityEnquirySidelink. Yet, in another embodiment, the PC5-RRC is a new RRC message. Note that in these embodiments, it may be assumed that no end-to-end connection between the RM UE and the network (e.g., the NN 1000 or the network 700) is yet in place (e.g., there is only a connection between the RM UE and the RL UE - see also Fig. 14).

In one embodiment, upon receiving the capabilities (e.g., the first capability information) from one or more RM UE(s), the RL UE (e.g., the RLCU 800) sends the capabilities from the RM UE(s) optionally together with its own capabilities (e.g., the second capability information) to the network in the same RRC message. In another embodiment, upon receiving the capabilities from one or more RM UE(s), the RL UE sends one RRC message for each capability that needs to be sent to the network.

In another embodiment, if the RL UE sends all the capabilities (the ones from the RM UE(s) and potentially also its own capabilities) in one RRC message, the RL UE includes all the capabilities in the same information element. Yet, in one embodiment, if the RL UE sends all the capabilities (the ones from the RM UE(s) and potentially also its own capabilities) in one RRC message, the RL includes each capability in a separate information element.

In one embodiment, when sending the capabilities to the network, the RL UE includes a first index for each capability so that each capability can be associated to the correct (e.g., type of) UE (e.g., RL UE or one or more RM UEs). In another embodiment, the first index is represented by one or more than one of the following parameters/fields:
- A new integer assigned by the RL UE;
- A L2 destination ID;
- A L2 source ID;
- An integer indicating the UE type, e.g., RL UE or RM UE, UE category;
- A UE ID unique globally or in an area; and
- Cast type.

In one embodiment, the first index is represented by an existing capability ID generally used to identify a set of capability (e.g., the UE Radio Capability ID). In another embodiment, the first index is a new index and is used to assign a unique ID with which the RM UE can be identified by the RM UE itself, the RL UE, the network (e.g., the NN 1000 such as a NG-RAN node), and the core network.

In another embodiment, the first index is generated by the NG-RAN node (e.g., the NN 1000). In another embodiment, the first index is generated by the RL UE. Yet, in another embodiment, the first index is generated by the core network (e.g., a core of the network 700).

In one embodiment, when sending the capabilities to the network, the RL UE includes only the capability ID of the RM UE, if configured previously by the core network. In another embodiment, when sending the capabilities to the network (NW), the RL UE includes the capability ID and the new index in order to identify the RM UE, if the capability ID has been configured previously by the core network (e.g., the core of the NW 700). This latter case may be needed because the capability ID may not be supported by one or more of the RL UE, the NG-RAN node, the RM UE and the core network (those network nodes need to support optimizations on the UE radio capability signaling (e.g., RACS) in order to understand the capability ID).

In one sub-embodiment, no index or a predefined index value is associated with capabilities of the RL UE or UE that is directly communicating with the NW.

In another sub-embodiment, a capability may be associated with more than one first index, for example if multiple (e.g., type of) UEs have the same capability. In another embodiment, the RL UE keeps a mapping between capability and (e.g., type of) RM UE in its memory and guarantees that the right capability is linked to the right (e.g., type of) RM UE when exchanged between the RM UE and the network. Alternatively, in one embodiment the RL UE sends the mapping between capability and (e.g., type of) RM UE to the network so the network is aware about which (e.g., type of) UE the capability belongs to. This may be the case when the capabilities are sent by the RL UE without the first index and it is the network that adds the first index according to the received mapping.

In another embodiment, the RL UE keeps a mapping between RM UE ID and (e.g., type of) RM UE in its memory, and is informed of the UE type by the remote UE.

In another embodiment, the RM UE sends its own capabilities to the network via the RL UE only after an end-to-end connectivity between the RM UE and the network is in place (see Fig. 15).

In case the capabilities are exchanged after the relay path is established, the assumption is that the two UEs can use some basic capability (specified in some 3GPP Release or Draft specification) to establish a preliminary relay connection just for the sake of exchanging the capabilities (and, e.g., some other critical information or configuration). Then, after the capabilities are acquired by the network, the relay may be reconfigured with e.g., more functionalities.

In another embodiment, upon receiving the RM UE's capabilities via the RL UE, the network generates a (e.g. first relay path) configuration to enable or establish the relay path for the (e.g., type of) RM UE(s) to which the capabilities belong and sends it to the RL UE. Yet, in one embodiment, if the received capabilities belong to more than one (e.g., type of) RM UEs, the network generates configurations to enable or establish the relay path with each (e.g., type of) RM UE and send all these configurations within one RRC message to the RL UE. The RL UE, after decoding the RRC message, may then forward the right configuration to the right RM UE according to the mapping between the capability and (e.g., type of) RM UE and the mapping between the RM UE ID and (e.g., type of) RM UE. Alternatively, in another embodiment, if the received capabilities belong to more than one (e.g., type of) RM UEs, the network generates configurations to enable or establish the relay path with each (e.g., type of) RM UE and sends one RRC message for each generated configuration to the RL UE. The RL UE, after decoding the RRC message, may then forward the right configuration to the right RM UE according to the mapping between the capability and (e.g., type of) RM UE and the mapping between the RM UE ID and (e.g., type of) RM UE.

In another embodiment, when generating multiple configurations, one for each capability received, the network includes in the configuration an (e.g., second) index to associate the configuration to the right (e.g., type of) RM UE. Alternatively, if the network did not receive any mapping rule from the RL UE, the network (e.g., the NN 1000) when sending the configurations to the RL UE, sends these configurations in the same order as the corresponding capabilities have been received. Yet, in one embodiment, if a mapping rule has been received by the RL UE, the network include an (e.g., second) index in each of the configuration according to the mapping rule received by the RL UE. In this latter case, the network may receive from the RL UE the capabilities without any (e.g., first) index and the mapping rule. It may be the network that, when sending the configuration to the RL UE, includes the (e.g., second) index according to the received mapping. On the contrary, if the RL UE sends the capabilities with an (e.g., first) index, the network when sending back the configuration may reuse the same index for indicating to which capability the configuration refers.

In one sub-embodiment, a configuration may be associated with more than one (e.g., second) index, in case e.g. multiple (e.g., types of) UEs are configured with the same configuration.

In one embodiment, upon receiving the capabilities from the RM UE (e.g., via the RL UE), the network generates the configuration for enabling or establishing the relay path and sends it to the RM UE via the RL UE.

In another embodiment, upon receiving the capabilities from the RM UE via the RL UE, the network rejects the request to establish a relay path and sends an RRC message to the RM UE via the RL UE.

Yet in another embodiment, upon receiving the capabilities associated with certain (e.g., type of) RM UE(s) from the RL UE, the network rejects the request to establish a relay path for that (e.g., type of) RM UE(s) and sends an RRC message to the RL UE which further forwards the message to the relevant RM UEs according to the mapping between the capability and (e.g., type of) RM UE and the mapping between the RM UE ID and (e.g., type of) RM UE.

As has become apparent from the above, the technique described herein allows an RM UE to report its own capabilities to the network via an RL UE. In doing this, two variants are provided:
1. The RM UE, after establishing a relay path (e.g., with basic configurations and parameters) and, optionally, security with the network, reports its capabilities via the RL UE to the network.
2. The RM UE, before establishing a relay path with the network, exchanges its capabilities with the RL UE (e.g., via PC5-RRC), and the RL UE forwards this capability to the network. Upon receiving the RM UE capabilities, the network can then generate the necessary configurations and/or parameters to establish a relay path and send them to the RM UE via the RL UE.

The disclosed technique allows an RM UE to exchange its capabilities with the network. In such a way, a relay path can be established properly and QoS requirements (e.g., for which the relay path is established, for example Qos requirements for public safety or V2X) can be guaranteed. If the RM UE does not have any possibility to report its capabilities, the relay path establishment may fail with a consequential drop of the connectivity.

## Claims

1. A method of informing a network node, NN, (12, 1000) of a network (700) about at least one sidelink-related radio access capability of a remote communication unit, RMCU, (14, 900) to enable configuring a relay path between the RMCU (14, 900) and the NN via a relay communication unit, RLCU, (2, 4, 6, 8, 800) connected to the NN (12, 1000), the method being performed by the RLCU (2, 4, 6, 8, 800) and comprising:
receiving (1102, 1412), from the RMCU (14, 900), first capability information indicative of at least one sidelink-related radio access capability of the RMCU (14, 900), wherein the first capability information, before being transmitted to the NN (1000), is enriched by the RLCU (800) with a first index assigned to the at least one capability indicated by the first capability information, the first index associating the at least one capability indicated by the first capability information with the communication unit (800, 900) having the at least one capability; and
transmitting (1104, 1414) the first capability information to the NN (12, 1000);
wherein the method further comprises:
- receiving, from the NN (12, 1000), first configuration information indicative of a first relay path configuration for a relay path between the RMCU (14, 900) and the NN (12, 1000) via the RLCU (2, 4, 6, 8, 800);
- determining, based on a second index comprised in the first configuration information and associating the first relay path configuration with the RMCU (900), that the first relay path information is intended for the RMCU (900); and
- transmitting the first configuration information to the RMCU (14, 900) only if it is determined that the first configuration information is intended for the RMCU (900);
or
- receiving, from the NN (12, 1000), rejection information indicative of the NN (12, 1000) not determining a first relay path configuration for a relay path between the RMCU (14, 900) and the NN (12, 1000) via the RLCU (2, 4, 6, 8, 800);
- determining, based on a second index comprised in the rejection information and associating the rejection information to the RMCU (14, 900), that the rejection information is intended for the RMCU (14, 900); and
- transmitting the rejection information to the RMCU (14, 900) only if it is determined that the rejection information is intended for the RMCU (14, 900).

2. The method of claim 1, wherein:
- the first index is one of generated by the RLCU (2, 4, 6, 8, 800) and obtained from the NN (12, 1000) or a core of the network (700); and/or
- the first index is a predefined index; and/or
- the RLCU (2, 4, 6, 8, 800) stores a mapping between the at least one capability indicated by the capability information and at least one of a type and a unique identifier of the communication unit having the at least one capability, wherein the method further comprises: determining the first index based on the mapping.

3. The method of claim 1 or 2, wherein:
(a) the sidelink is based on a PC5 interface of the RMCU (14, 900); and/or
(b) the capability information is transmitted to the NN (12, 1000) within a single message; and/or
(c) the RLCU (2, 4, 6, 8, 800) stores a mapping between the at least one capability indicated by the capability information and at least one of a type and a unique identifier of the communication unit having the at least one capability, wherein the method further comprises: transmitting the mapping to the NN (12, 1000).

4. The method of any one of claims 1 to 3, wherein:
- the first configuration information is at least one of received and transmitted by the RLCU (800) in an RRC message.

5. The method of any one of claims 1 to 3, wherein:
- the rejection information is at least one of received and transmitted by the RLCU (2, 4, 6, 8, 800) in an RRC message.

6. A method of informing a network node, NN, (12, 1000) of a network (700) about at least one sidelink-related radio access capability of a remote communication unit, RMCU, (14, 900) to enable configuring a relay path between the RMCU (14, 900) and the NN (12, 1000) via a relay communication unit, RLCU, (2, 4, 6, 8, 800) connected to the NN (12, 1000), the method being performed by the RMCU (14, 900) and comprising:
transmitting (1202, 1412), to the RLCU (2, 4, 6, 8, 800), first capability information indicative of at least one sidelink-related radio access capability of the RMCU (14, 900) for configuring the RLCU (2, 4, 6, 8, 800) to transmit the first capability information to the NN (12, 1000), wherein the first capability information is enriched with a first index assigned to the at least one capability indicated by the first capability information, the first index associating the at least one capability indicated by the first capability information with the communication unit (800, 900) having the at least one capability,
wherein the method further comprises:
- receiving, from the RLCU, first configuration information (i) indicative of a first relay path configuration for a relay path between the RMCU (14, 900) and the NN (12, 1000) via the RLCU (2, 4, 6, 8, 800) and (ii) comprising a second index that associates a first relay path configuration with the RMCU (900);
or
- receiving, from the RLCU, rejection information (i) indicative of the NN (12, 1000) not determining a first relay path configuration for a relay path between the RMCU (14, 900) and the NN (12, 1000) via the RLCU (2, 4, 6, 8, 800) and (ii) comprising a second index that associates a first relay path configuration with the RMCU (900)

7. A method of informing a network node, NN, (12, 1000) of a network (700) about at least one sidelink-related radio access capability of a remote communication unit, RMCU, (14, 900) to enable configuring a relay path between the RMCU (14, 900) and the NN (12, 1000) via a relay communication unit, RLCU, (2, 4, 6, 8, 800) connected to the NN (12, 1000), the method being performed by the NN (12, 1000) and comprising:
receiving (1302, 1414), from the RLCU (2, 4, 6, 8, 800), first capability information indicative of at least one sidelink-related radio access capability of the RMCU (14, 900); and
determining, based on the received capability information, a first relay path configuration for a relay path between the RMCU (14, 900) and the NN (12, 1000) via the RLCU (2, 4, 6, 8, 800),
wherein the method further comprises:
- transmitting (1416), to the RLCU (2, 4, 6, 8, 800), first configuration information indicative of the first relay path configuration for a relay path between the RMCU (14, 900) and the NN (12, 1000) via the RLCU (2, 4, 6, 8, 800), wherein the received capability information has been enriched with a first index assigned to the at least one capability indicated by the capability information, the first index associating the at least one capability indicated by the capability information with the communication unit having the at least one capability; and
- determining, based on the first index, a second index associating the first relay path configuration with the RMCU (14, 900), wherein the first configuration information further comprises the second index;
or
- transmitting (1416), to the RLCU (2, 4, 6, 8, 800), rejection information indicative of the NN (12, 1000) not determining the first relay path configuration for a relay path between the RMCU (14, 900) and the NN (12, 1000) via the RLCU (2, 4, 6, 8, 800), wherein the received capability information has been enriched with a first index assigned to the at least one capability indicated by the capability information, the first index associating the at least one capability indicated by the capability information with the communication unit having the at least one capability; and
- determining, based on the first index, a second index associating the first relay path configuration with the RMCU (14, 900), wherein the rejection information further comprises the second index.

8. The method of any one of claims 1 to 7, wherein:
the RMCU (14, 900) has no end-to-end connection to the NN (12, 1000) when the first capability information is transmitted or received,
wherein, optionally, the first capability information is transmitted in a message triggering establishment of a relay path between the RMCU (14, 900) and the NN (12, 1000) via the RLCU (2, 4, 6, 8, 800).

9. The method of any one of claims 1 to 7, wherein
the RMCU (14, 900) has an established end-to-end connection to the NN (12, 1000) when the first capability information is transmitted or received.

10. The method of claim 9, wherein:
- the end-to-end connection is established based on a predetermined relay path configuration; and/or
- the end-to-end connection is established irrespective of the at least one sidelink-related radio access capability of the RMCU (14, 900) indicated by the first capability information; and/or
- the first capability information is transmitted via an Uu interface of the RMCU (14, 900); and/or
- the first capability information is transmitted within a message triggering reconfiguration of the end-to-end connection between the RMCU (14, 900) and the NN (12, 1000) as the relay path between the RMCU (14, 900) and the NN (12, 1000) via the RLCU (2, 4, 6, 8, 800).

11. The method of any one of claims 1, 2 or 7, wherein
the first index is represented by at least one of the following parameters:
- an integer assigned by the RLCU (2, 4, 6, 8, 800);
- a layer-2, L2, destination identifier;
- a layer-2, L2, source identifier;
- an integer indicating a type or category of the communication unit;
- a locally or globally unique identifier of the communication unit; and
- a Cast type.

12. The method of claim any one of claims 1, 2, 7 and 11, wherein the first index is represented by an User Equipment, UE, Radio Capability identifier, ID, identifying a set of capabilities of the communication unit having the at least one capability.

13. The method of claim 12, wherein:
- the first capability information is transmitted only after having been enriched, by one of the RLCU (2, 4, 6, 8, 800) and the RMCU (14, 900), with only the UE Radio Capability ID identifying a set of capabilities of the RMCU (14, 900); or
- the first capability information is transmitted only after having been enriched, by one of the RLCU (2, 4, 6, 8, 800) and the RMCU (14, 900), with both the unique identifier of the RMCU (14, 900) and the UE Radio Capability ID identifying a set of capabilities of the RMCU (14, 900).

14. A relay communication unit, RLCU, (2, 4, 6, 8, 800) configured for informing a network node, NN, (12, 1000) of a network (700) about at least one sidelink-related radio access capability of a remote communication unit, RMCU, (14, 900) to enable configuring a relay path between the RMCU (14, 900) and the NN (12, 1000) via the RLCU (2, 4, 6, 8, 800) connected to the NN (12, 1000), the RLCU being configured to perform the method of any of claims 1 to 5 or of any of claims 8 to 13 when depending on any of claims 1 to 5.

15. A remote communication unit, RMCU, (14, 900) configured for informing a network node, NN, (12, 1000) of a network (700) about at least one sidelink-related radio access capability of the RMCU, (14, 900) to enable configuring a relay path between the RMCU (14, 900) and the NN (12, 1000) via a relay communication unit, RLCU (2, 4, 6, 8, 800), connected to the NN (12, 1000), the RMCU (14, 900) being configured to perform the method of claim 6 or of any of claims 8 to 13 when depending on claim 6.

16. A network node, NN, (12, 1000) of a network (700), configured for being informed about at least one sidelink-related radio access capability of a remote communication unit, RMCU, (14, 900) to enable configuring a relay path between the RMCU (14, 900) and the NN (12, 1000) via a relay communication unit, RLCU, (2, 4, 6, 8, 800) connected to the NN (12, 1000), the NN (1000) being configured to perform the method of claim 7 or of any of claims 8 to 13 when depending on claim 7.

17. A computer program comprising instructions which, when the program is executed by a processor, cause the processor to carry out the method of any one of claims 1 to 13.

## Patentansprüche

1. Verfahren zum Informieren eines Netzwerkknotens, NN, (12, 1000) eines Netzwerks (700) über mindestens eine Sidelink-bezogene Funkzugangsfähigkeit einer entfernten Kommunikationseinheit, RMCU, (14, 900), um zu ermöglichen, dass ein Relaispfad zwischen der RMCU (14, 900) und dem NN über eine Relaiskommunikationseinheit, RLCU, (2, 4, 6, 8, 800), die mit dem NN (12, 1000) verbunden ist, konfiguriert wird, wobei das Verfahren von der RLCU (2, 4, 6, 8, 800) durchgeführt wird und Folgendes umfasst:
Empfangen (1102, 1412) erster Fähigkeitsinformationen von der RMCU (14, 900), die mindestens eine Sidelink-bezogene Funkzugangsfähigkeit der RMCU (14, 900) angeben, wobei die ersten Fähigkeitsinformationen vor dem Senden an den NN (1000) durch die RLCU (800) mit einem ersten Index angereichert werden, der der mindestens einen durch die ersten Fähigkeitsinformationen angegebenen Fähigkeit zugewiesen ist, wobei der erste Index die mindestens eine durch die ersten Fähigkeitsinformationen angegebene Fähigkeit mit der Kommunikationseinheit (800, 900) mit der mindestens einen Fähigkeit assoziiert; und
Senden (1104, 1414) der ersten Fähigkeitsinformationen an den NN (12, 1000);
wobei das Verfahren ferner Folgendes umfasst:
- Empfangen erster Konfigurationsinformationen von dem NN (12, 1000), wobei die ersten Konfigurationsinformationen eine erste Relaispfadkonfiguration für einen Relaispfad zwischen der RMCU (14, 900) und dem NN (12, 1000) über die RLCU (2, 4, 6, 8, 800) angeben;
- Bestimmen basierend auf einem zweiten Index, der in den ersten Konfigurationsinformationen umfasst ist und die erste Relaispfadkonfiguration mit der RMCU (900) assoziiert, dass die ersten Relaispfadinformationen für die RMCU (900) bestimmt sind; und
- Senden der ersten Konfigurationsinformationen nur dann an die RMCU (14, 900), wenn bestimmt wird, dass die ersten Konfigurationsinformationen für die RMCU (900) bestimmt sind;
oder
- Empfangen von Ablehnungsinformationen von dem NN (12, 1000), die angeben, dass der NN (12, 1000) keine erste Relaispfadkonfiguration für einen Relaispfad zwischen der RMCU (14, 900) und dem NN (12, 1000) über die RLCU (2, 4, 6, 8, 800) bestimmt;
- Bestimmen basierend auf einem zweiten Index, der in den Ablehnungsinformationen umfasst ist und die Ablehnungsinformationen mit der RMCU (14, 900) assoziiert, dass die Ablehnungsinformationen für die RMCU (14, 900) bestimmt sind; und
- Senden der Ablehnungsinformationen nur dann an die RMCU (14, 900), wenn bestimmt wird, dass die Ablehnungsinformationen für die RMCU (14, 900) bestimmt sind.

2. Verfahren nach Anspruch 1, wobei:
- der erste Index von der RLCU (2, 4, 6, 8, 800) erzeugt oder von dem NN (12, 1000) oder einem Kern des Netzwerks (700) erhalten wird; und/oder
- der erste Index ein vordefinierter Index ist; und/oder
- die RLCU (2, 4, 6, 8, 800) eine Zuordnung zwischen der mindestens einen durch die Fähigkeitsinformationen angegebenen Fähigkeit und mindestens einem von einem Typ und einer eindeutigen Kennung der Kommunikationseinheit mit der mindestens einen Fähigkeit speichert, wobei das Verfahren ferner Folgendes umfasst: Bestimmen des ersten Index basierend auf der Zuordnung.

3. Verfahren nach Anspruch 1 oder 2, wobei:
(a) der Sidelink auf einer PC5-Schnittstelle der RMCU (14, 900) basiert; und/oder
(b) die Fähigkeitsinformationen innerhalb einer einzigen Nachricht an den NN (12, 1000) gesendet werden; und/oder
(c) die RLCU (2, 4, 6, 8, 800) eine Zuordnung zwischen der mindestens einen durch die Fähigkeitsinformationen angegebenen Fähigkeit und mindestens einem von einem Typ und einer eindeutigen Kennung der Kommunikationseinheit mit der mindestens einen Fähigkeit speichert, wobei das Verfahren ferner Folgendes umfasst: Senden der Zuordnung an den NN (12, 1000).

4. Verfahren nach einem der Ansprüche 1 bis 3, wobei:
- die ersten Konfigurationsinformation durch die RLCU (800) in einer RRC-Nachricht empfangen oder gesendet werden.

5. Verfahren nach einem der Ansprüche 1 bis 3, wobei:
- die Ablehnungsinformation durch die RLCU (2, 4, 6, 8, 800) in einer RRC-Nachricht empfangen oder gesendet werden.

6. Verfahren zum Informieren eines Netzwerkknotens, NN, (12, 1000) eines Netzwerks (700) über mindestens eine Sidelink-bezogene Funkzugangsfähigkeit einer entfernten Kommunikationseinheit, RMCU, (14, 900), um zu ermöglichen, dass ein Relaispfad zwischen der RMCU (14, 900) und dem NN (12, 1000) über eine Relaiskommunikationseinheit, RLCU, (2, 4, 6, 8, 800), die mit dem NN (12, 1000) verbunden ist, konfiguriert wird, wobei das Verfahren von der RMCU (14, 900) durchgeführt wird und Folgendes umfasst:
Senden (1202, 1412) erster Fähigkeitsinformationen an die RLCU (2, 4, 6, 8, 800), die mindestens eine Sidelink-bezogene Funkzugangsfähigkeit der RMCU (14, 900) angeben, um die RLCU (2, 4, 6, 8, 800) zum Senden der ersten Fähigkeitsinformationen an den NN (12, 1000) zu konfigurieren, wobei die ersten Fähigkeitsinformationen mit einem ersten Index angereichert werden, der der mindestens einen durch die ersten Fähigkeitsinformationen angegebenen Fähigkeit zugewiesen ist, wobei der erste Index die mindestens eine durch die ersten Fähigkeitsinformationen angegebene Fähigkeit mit der Kommunikationseinheit (800, 900) mit der mindestens einen Fähigkeit assoziiert,
wobei das Verfahren ferner Folgendes umfasst:
- Empfangen erster Konfigurationsinformationen von der RLCU, die (i) eine erste Relaispfadkonfiguration für einen Relaispfad zwischen der RMCU (14, 900) und dem NN (12, 1000) über die RLCU (2, 4, 6, 8, 800) angeben, und (ii) einen zweiten Index umfassen, der eine erste Relaispfadkonfiguration mit der RMCU (900) assoziiert;
oder
- Empfangen von Ablehnungsinformationen von der RLCU, (i) die angeben, dass der NN (12, 1000) keine erste Relaispfadkonfiguration für einen Relaispfad zwischen der RMCU (14, 900) und dem NN (12, 1000) über die RLCU (2, 4, 6, 8, 800) bestimmt; und (ii) einen zweiten Index umfassen, der eine erste Relaispfadkonfiguration mit der RMCU (900) assoziiert.

7. Verfahren zum Informieren eines Netzwerkknotens, NN, (12, 1000) eines Netzwerks (700) über mindestens eine Sidelink-bezogene Funkzugangsfähigkeit einer entfernten Kommunikationseinheit, RMCU, (14, 900), um zu ermöglichen, dass ein Relaispfad zwischen der RMCU (14, 900) und dem NN (12, 1000) über eine Relaiskommunikationseinheit, RLCU, (2, 4, 6, 8, 800), die mit dem NN (12, 1000) verbunden ist, konfiguriert wird, wobei das Verfahren von dem NN (12, 1000) durchgeführt wird und Folgendes umfasst:
Empfangen (1302, 1414) erster Fähigkeitsinformationen von der RLCU (2, 4, 6, 8, 800), die mindestens eine Sidelink-bezogene Funkzugangsfähigkeit der RMCU (14, 900) angeben; und
Bestimmen einer ersten Relaispfadkonfiguration für einen Relaispfad zwischen der RMCU (14, 900) und dem NN (12, 1000) über die RLCU (2, 4, 6, 8, 800) basierend auf den empfangenen Fähigkeitsinformationen,
wobei das Verfahren ferner Folgendes umfasst:
- Senden (1416) erster Fähigkeitsinformationen an die RLCU (2, 4, 6, 8, 800), die die erste Relaispfadkonfiguration für einen Relaispfad zwischen der RMCU (14, 900) und dem NN (12, 1000) über die RLCU (2, 4, 6, 8, 800) angeben, wobei die empfangenen Fähigkeitsinformationen mit einem ersten Index angereichert wurden, der der mindestens einen durch die ersten Fähigkeitsinformationen angegebenen Fähigkeit zugewiesen ist, wobei der erste Index die mindestens eine durch die ersten Fähigkeitsinformationen angegebene Fähigkeit mit der Kommunikationseinheit mit der mindestens einen Fähigkeit assoziiert; und
- Bestimmen eines zweiten Index, der die erste Relaispfadkonfiguration mit der RMCU (14, 900) assoziiert, basierend auf dem ersten Index, wobei die ersten Konfigurationsinformationen ferner den zweiten Index umfassen;
oder
- Senden (1416) von Ablehnungsinformationen an die RLCU (2, 4, 6, 8, 800), die angeben, dass der NN (12, 1000) keine erste Relaispfadkonfiguration für einen Relaispfad zwischen der RMCU (14, 900) und dem NN (12, 1000) über die RLCU (2, 4, 6, 8, 800) bestimmt, wobei die empfangenen Fähigkeitsinformationen mit einem ersten Index angereichert wurden, der der mindestens einen durch die ersten Fähigkeitsinformationen angegebenen Fähigkeit zugewiesen ist, wobei der erste Index die mindestens eine durch die ersten Fähigkeitsinformationen angegebene Fähigkeit mit der Kommunikationseinheit mit der mindestens einen Fähigkeit assoziiert; und
- Bestimmen eines zweiten Index, der die erste Relaispfadkonfiguration mit der RMCU (14, 900) assoziiert, basierend auf dem ersten Index, wobei die Ablehnungsinformationen ferner den zweiten Index umfassen.

8. Verfahren nach einem der Ansprüche 1 bis 7, wobei:
die RMCU (14, 900) keine Ende-zu-Ende-Verbindung zu dem NN (12, 1000) aufweist, wenn die ersten Fähigkeitsinformationen gesendet oder empfangen werden,
wobei optional die ersten Fähigkeitsinformation in einer Nachricht gesendet werden, die den Aufbau eines Relaispfades zwischen der RMCU (14, 900) und dem NN (12, 1000) über die RLCU (2, 4, 6, 8, 800) auslöst.

9. Verfahren nach einem der Ansprüche 1 bis 7, wobei
die RMCU (14, 900) eine Ende-zu-Ende-Verbindung zu dem NN (12, 1000) hergestellt hat, wenn die ersten Fähigkeitsinformationen gesendet oder empfangen werden.

10. Verfahren nach Anspruch 9, wobei:
- die Ende-zu-Ende-Verbindung basierend auf einer vorbestimmten Relaispfadkonfiguration hergestellt wird; und/oder
- die Ende-zu-Ende-Verbindung ungeachtet der mindestens einen durch die ersten Fähigkeitsinformationen angegebenen Sidelink-bezogenen Funkzugangsfähigkeit der RMCU (14, 900) hergestellt wird; und/oder
- die ersten Fähigkeitsinformationen über eine Uu-Schnittstelle der RMCU (14, 900) gesendet werden; und/oder
- die ersten Fähigkeitsinformationen innerhalb einer Nachricht gesendet werden, die eine Rekonfiguration der Ende-zu-Ende-Verbindung zwischen der RMCU (14, 900) und dem NN (12, 1000) als den Relaispfad zwischen der RMCU (14, 900) und dem NN (12, 1000) über die RLCU (2, 4, 6, 8, 800) auslöst.

11. Verfahren nach einem der Ansprüche 1, 2 oder 7, wobei
der erste Index durch mindestens einen der folgenden Parameter dargestellt ist:
- eine ganze Zahl, die von der RLCU (2, 4, 6, 8, 800) zugewiesen wird;
- eine Schicht-2-Zielkennung, L2-Zielkennung;
- eine Schicht-2-Quellkennung, L2-Quellkennung;
- eine ganze Zahl, die einen Typ oder eine Kategorie der Kommunikationseinheit angibt;
- eine lokal oder global eindeutige Kennung der Kommunikationseinheit und
- eine Cast-Typ.

12. Verfahren nach einem der Ansprüche 1, 2, 7 und 11, wobei der erste Index durch eine Benutzereinrichtungs-,UE-,Funkfähigkeitskennung, ID, dargestellt ist, die einen Satz von Fähigkeiten der Kommunikationseinheit mit der mindestens einen Fähigkeit identifiziert.

13. Verfahren nach Anspruch 12, wobei:
- die ersten Fähigkeitsinformationen nur gesendet werden, nachdem sie durch eine von der RLCU (2, 4, 6, 8, 800) und der RMCU (14, 900) nur mit der UE-Funkfähigkeits-ID angereichert wurden, die einen Satz von Fähigkeiten der RMCU (14, 900) identifiziert; oder
- die ersten Fähigkeitsinformationen nur gesendet werden, nachdem sie durch eine von der RLCU (2, 4, 6, 8, 800) und der RMCU (14, 900) sowohl mit der eindeutigen Kennung der RMCU (14, 900) als auch der UE-Funkfähigkeits-ID angereichert wurden, die einen Satz von Fähigkeiten der RMCU (14, 900) identifiziert.

14. Relaiskommunikationseinheit, RLCU, (2, 4, 6, 8, 800), die zum Informieren eines Netzwerkknotens, NN, (12, 1000) eines Netzwerks (700) über mindestens eine Sidelink-bezogene Funkzugangsfähigkeit einer entfernten Kommunikationseinheit, RMCU, (14, 900) konfiguriert ist, um zu ermöglichen, dass ein Relaispfad zwischen der RMCU (14, 900) und dem NN (12, 1000) über eine Relaiskommunikationseinheit, RLCU, (2, 4, 6, 8, 800), die mit dem NN (12, 1000) verbunden ist, konfiguriert wird, wobei die RLCU zum Durchführen des Verfahrens nach einem der Ansprüche 1 bis 5 oder nach einem der Ansprüche 8 bis 13, wenn von einem der Ansprüche 1 bis 5 abhängig, konfiguriert ist.

15. Entfernte Kommunikationseinheit, RMCU, (14, 900), die zum Informieren eines Netzwerkknotens, NN, (12, 1000) eines Netzwerks (700) über mindestens eine Sidelink-bezogene Funkzugangsfähigkeit der RMCU (14, 900) konfiguriert ist, um zu ermöglichen, dass ein Relaispfad zwischen der RMCU (14, 900) und dem NN (12, 1000) über eine Relaiskommunikationseinheit, RLCU, (2, 4, 6, 8, 800), die mit dem NN (12, 1000) verbunden ist, konfiguriert wird, wobei die RMCU (14, 900) zum Durchführen des Verfahrens nach Anspruch 6 oder nach einem der Ansprüche 8 bis 13, wenn von Anspruch 6 abhängig, konfiguriert ist.

16. Netzwerkknoten, NN, (12, 1000) eines Netzwerks (700), der dazu konfiguriert ist, über mindestens eine Sidelink-bezogene Funkzugangsfähigkeit einer entfernten Kommunikationseinheit, RMCU, (14, 900) informiert zu werden, um zu ermöglichen, dass ein Relaispfad zwischen der RMCU (14, 900) und dem NN (12, 1000) über eine Relaiskommunikationseinheit, RLCU, (2, 4, 6, 8, 800), die mit dem NN (12, 1000) verbunden ist, konfiguriert wird, wobei der NN (1000) zum Durchführen des Verfahrens nach Anspruch 7 oder nach einem der Ansprüche 8 bis 13, wenn von Anspruch 7 abhängig, konfiguriert ist.

17. Computerprogramm, umfassend Anweisungen, die bei Ausführung des Programms durch einen Prozessor den Prozessor zum Durchführen des Verfahrens nach einem der Ansprüche 1 bis 13 veranlassen.

## Revendications

1. Procédé d'information d'un nœud de réseau, NN, (12, 1000) d'un réseau (700) au sujet d'au moins une capacité d'accès radio liée à une liaison latérale d'une unité de communication à distance, RMCU, (14, 900) pour permettre la configuration d'un trajet de relais entre la RMCU (14, 900) et le NN via une unité de communication de relais, RLCU, (2, 4, 6, 8, 800) connectée au NN (12, 1000), le procédé étant réalisé par la RLCU (2, 4, 6, 8, 800) et comprenant :
la réception (1102, 1412), depuis la RMCU (14, 900), de premières informations de capacité indiquant au moins une capacité d'accès radio liée à une liaison latérale de la RMCU (14, 900), dans lequel les premières informations de capacité, avant d'être transmises au NN (1000), sont enrichies par la RLCU (800) avec un premier indice attribué à l'au moins une capacité indiquée par les premières informations de capacité, le premier indice associant l'au moins une capacité indiquée par les premières informations de capacité à l'unité de communication (800, 900) présentant l'au moins une capacité ; et
la transmission (1104, 1414) des premières informations de capacité au NN (12, 1000) ;
dans lequel le procédé comprend en outre :
- la réception, depuis le NN (12, 1000), de premières informations de configuration indiquant une première configuration de trajet de relais pour un trajet de relais entre la RMCU (14, 900) et le NN (12, 1000) via la RLCU (2, 4, 6, 8, 800) ;
- la détermination, sur la base d'un deuxième indice compris dans les premières informations de configuration et associant la première configuration de trajet de relais à la RMCU (900), que les premières informations de trajet de relais sont destinées à la RMCU (900) ; et
- la transmission des premières informations de configuration à la RMCU (14, 900) uniquement s'il est déterminé que les premières informations de configuration sont destinées à la RMCU (900) ;
or
- la réception, depuis le NN (12, 1000), informations de rejet indiquant que le NN (12, 1000) ne détermine pas une première configuration de trajet de relais pour un trajet de relais entre la RMCU (14, 900) et le NN (12, 1000) via la RLCU (2, 4, 6, 8, 800) ;
- la détermination, sur la base d'un deuxième indice compris dans les informations de rejet et associant les informations de rejet à la RMCU (14, 900), que les informations de rejet sont destinées à la RMCU (14, 900) ; et
- la transmission des informations de rejet à la RMCU (14, 900) uniquement s'il est déterminé que les informations de rejet sont destinées à la RMCU (14, 900).

2. Procédé selon la revendication 1, dans lequel :
- le premier indice est soit généré par la RLCU (2, 4, 6, 8, 800) soit obtenu depuis le NN (12, 1000) or un cœur du réseau (700) ; et/ou
- le premier indice est un indice prédéfini ; et/ou
- la RLCU (2, 4, 6, 8, 800) stocke un mappage entre l'au moins une capacité indiquée par les informations de capacité et au moins l'un parmi un type et un identifiant unique de l'unité de communication présentant l'au moins une capacité, dans lequel le procédé comprend en outre : la détermination du premier indice sur la base du mappage.

3. Procédé selon la revendication 1 or 2, dans lequel :
(a) la liaison latérale est basée sur une interface PC5 de la RMCU (14, 900) ; et/ou
(b) les informations de capacité sont transmises au NN (12, 1000) dans un message unique ; et/ou
(c) la RLCU (2, 4, 6, 8, 800) stocke un mappage entre l'au moins une capacité indiquée par les informations de capacité et au moins l'un parmi un type et un identifiant unique de l'unité de communication présentant l'au moins une capacité, dans lequel le procédé comprend en outre : la transmission du mappage au NN (12, 1000).

4. Procédé selon l'une quelconque des revendications 1 à 3, dans lequel :
- les premières informations de configuration sont au moins l'une parmi reçues et transmises par la RLCU (800) dans un message RRC.

5. Procédé selon l'une quelconque des revendications 1 à 3, dans lequel :
- les informations de rejet sont au moins l'une parmi reçues et transmises par la RLCU (2, 4, 6, 8, 800) dans un message RRC.

6. Procédé d'information d'un nœud de réseau, NN, (12, 1000) d'un réseau (700) au sujet d'au moins une capacité d'accès radio liée à une liaison latérale d'une unité de communication à distance, RMCU, (14, 900) pour permettre la configuration d'un trajet de relais entre la RMCU (14, 900) et le NN (12, 1000) via une unité de communication de relais, RLCU, (2, 4, 6, 8, 800) connectée au NN (12, 1000), le procédé étant réalisé par la RMCU (14, 900) et comprenant :
la transmission (1202, 1412), à la RLCU (2, 4, 6, 8, 800), de premières informations de capacité indiquant au moins une capacité d'accès radio liée à une liaison latérale de la RMCU (14, 900) pour la configuration de la RLCU (2, 4, 6, 8, 800) pour transmettre les premières informations de capacité au NN (12, 1000), dans lequel les premières informations de capacité sont enrichies avec un premier indice attribué à l'au moins une capacité indiquée par les premières informations de capacité, le premier indice associant l'au moins une capacité indiquée par les premières informations de capacité à l'unité de communication (800, 900) présentant l'au moins une capacité,
dans lequel le procédé comprend en outre :
- la réception, depuis la RLCU, de premières informations de configuration (i) indiquant une première configuration de trajet de relais pour un trajet de relais entre la RMCU (14, 900) et le NN (12, 1000) via la RLCU (2, 4, 6, 8, 800) et (ii) comprenant un deuxième indice qui associe une première configuration de trajet de relais à la RMCU (900) ;
ou
- la réception, depuis la RLCU, d'informations de rejet (i) indiquant que le NN (12, 1000) ne détermine pas une première configuration de trajet de relais pour un trajet de relais entre la RMCU (14, 900) et le NN (12, 1000) via la RLCU (2, 4, 6, 8, 800) et (ii) comprenant un deuxième indice qui associe une première configuration de trajet de relais à la RMCU (900)

7. Procédé d'information d'un nœud de réseau, NN, (12, 1000) d'un réseau (700) au sujet d'au moins une capacité d'accès radio liée à une liaison latérale d'une unité de communication à distance, RMCU, (14, 900) pour permettre la configuration d'un trajet de relais entre la RMCU (14, 900) et le NN (12, 1000) via une unité de communication de relais, RLCU, (2, 4, 6, 8, 800) connectée au NN (12, 1000), le procédé étant réalisé par le NN (12, 1000) et comprenant :
la réception (1302, 1414), depuis la RLCU (2, 4, 6, 8, 800), de premières informations de capacité indiquant au moins une capacité d'accès radio liée à une liaison latérale de la RMCU (14, 900) ; et
la détermination, sur la base des informations de capacité reçues, d'une première configuration de trajet de relais pour un trajet de relais entre la RMCU (14, 900) et le NN (12, 1000) via la RLCU (2, 4, 6, 8, 800),
dans lequel le procédé comprend en outre :
- la transmission (1416), à la RLCU (2, 4, 6, 8, 800), de premières informations de configuration indiquant le première configuration de trajet de relais pour un trajet de relais entre la RMCU (14, 900) et le NN (12, 1000) via la RLCU (2, 4, 6, 8, 800), dans lequel les informations de capacité reçues ont été enrichies avec un premier indice attribué à l'au moins une capacité indiquée par les informations de capacité, le premier indice associant l'au moins une capacité indiquée par les informations de capacité à l'unité de communication présentant l'au moins une capacité ; et
- la détermination, sur la base du premier indice, d'un deuxième indice associant la première configuration de trajet de relais à la RMCU (14, 900), dans lequel les premières informations de configuration comprennent en outre le deuxième indice ;
ou
- la transmission (1416), à la RLCU (2, 4, 6, 8, 800), d'informations de rejet indiquant que le NN (12, 1000) ne détermine pas la première configuration de trajet de relais pour un trajet de relais entre la RMCU (14, 900) et le NN (12, 1000) via la RLCU (2, 4, 6, 8, 800), dans lequel les informations de capacité reçues ont été enrichies avec un premier indice attribué à l'au moins une capacité indiquée par les informations de capacité, le premier indice associant l'au moins une capacité indiquée par les informations de capacité à l'unité de communication présentant l'au moins une capacité ; et
- la détermination, sur la base du premier indice, d'un deuxième indice associant la première configuration de trajet de relais à la RMCU (14, 900), dans lequel les informations de rejet comprennent en outre le deuxième indice.

8. Procédé selon l'une quelconque des revendications 1 à 7, dans lequel :
la RMCU (14, 900) n'a pas de connexion de bout en bout au NN (12, 1000) lorsque les premières informations de capacité sont transmises or reçues,
dans lequel, facultativement, les premières informations de capacité sont transmises dans un message déclenchant l'établissement d'un trajet de relais entre la RMCU (14, 900) et le NN (12, 1000) via la RLCU (2, 4, 6, 8, 800).

9. Procédé selon l'une quelconque des revendications 1 à 7, dans lequel
la RMCU (14, 900) a une connexion de bout en bout établie au NN (12, 1000) lorsque les premières informations de capacité sont transmises or reçues.

10. Procédé selon la revendication 9, dans lequel :
- la connexion de bout en bout est établie sur la base d'une configuration de trajet de relais prédéterminée ; et/ou
- la connexion de bout en bout est établie indépendamment de l'au moins une capacité d'accès radio liée à une liaison latérale de la RMCU (14, 900) indiquée par les premières informations de capacité ; et/ou
- les premières informations de capacité sont transmises via une interface Uu de la RMCU (14, 900) ; et/ou
- les premières informations de capacité sont transmises dans un message déclenchant une reconfiguration de la connexion de bout en bout entre la RMCU (14, 900) et le NN (12, 1000) en tant que le trajet de relais entre la RMCU (14, 900) et le NN (12, 1000) via la RLCU (2, 4, 6, 8, 800).

11. Procédé selon l'une quelconque des revendications 1, 2 et 7, dans lequel
le premier indice est représenté par au moins l'un parmi les paramètres suivants :
- un entier attribué par la RLCU (2, 4, 6, 8, 800) ;
- un identifiant de destination de couche 2, L2 ;
- un identifiant de source de couche 2, L2 ;
- un entier indiquant un type ou une catégorie de l'unité de communication ;
- un identifiant localement ou mondialement unique de l'unité de communication ; et
- un type de Cast.

12. Procédé selon la revendication l'une quelconque des revendications 1, 2, 7 et 11, dans lequel le premier indice est représenté par un identifiant, ID, de capacité radio d'équipement utilisateur, UE, qui identifie un jeu de capacités de l'unité de communication présentant l'au moins une capacité.

13. Procédé selon la revendication 12, dans lequel :
- les premières informations de capacité sont transmises uniquement après avoir été enrichies, par l'une parmi la RLCU (2, 4, 6, 8, 800) et la RMCU (14, 900), avec uniquement l'ID de capacité radio d'UE qui identifie un jeu de capacités de la RMCU (14, 900) ; ou
- les premières informations de capacité sont transmises uniquement après avoir été enrichies, par l'une parmi la RLCU (2, 4, 6, 8, 800) et la RMCU (14, 900), avec à la fois l'identifiant unique de la RMCU (14, 900) et l'ID de capacité radio d'UE identifiant un jeu de capacités de la RMCU (14, 900).

14. Unité de communication de relais, RLCU, (2, 4, 6, 8, 800) configurée pour informer un nœud de réseau, NN, (12, 1000) d'un réseau (700) au sujet d'au moins une capacité d'accès radio liée à une liaison latérale d'une unité de communication à distance, RMCU, (14, 900) pour permettre la configuration d'un trajet de relais entre la RMCU (14, 900) et le NN (12, 1000) via la RLCU (2, 4, 6, 8, 800) connectée au NN (12, 1000), la RLCU étant configurée pour réaliser le procédé selon l'une quelconque des revendications 1 à 5 or selon l'une quelconque des revendications 8 à 13 lorsqu'elle dépend de l'une quelconque des revendications 1 à 5.

15. Unité de communication à distance, RMCU, (14, 900) configurée pour informer un nœud de réseau, NN, (12, 1000) d'un réseau (700) au sujet d'au moins une capacité d'accès radio liée à une liaison latérale de la RMCU, (14, 900) pour permettre la configuration d'un trajet de relais entre la RMCU (14, 900) et le NN (12, 1000) via une unité de communication de relais, RLCU (2, 4, 6, 8, 800), connectée au NN (12, 1000), la RMCU (14, 900) étant configurée pour réaliser le procédé selon la revendication 6 or selon l'une quelconque des revendications 8 à 13 lorsqu'elle dépend de la revendication 6.

16. Nœud de réseau, NN, (12, 1000) d'un réseau (700), configuré pour être informé au sujet d'au moins une capacité d'accès radio liée à une liaison latérale d'une unité de communication à distance, RMCU, (14, 900) pour permettre la configuration d'un trajet de relais entre la RMCU (14, 900) et le NN (12, 1000) via une unité de communication de relais, RLCU, (2, 4, 6, 8, 800) connectée au NN (12, 1000), le NN (1000) étant configuré pour réaliser le procédé selon la revendication 7 or selon l'une quelconque des revendications 8 à 13 lorsqu'elle dépend de la revendication 7.

17. Programme informatique comprenant des instructions qui, lorsque le programme est exécuté par un processeur, amènent le processeur à réaliser le procédé selon l'une quelconque des revendications 1 à 13.
